# EUROPEAN PATENT APPLICATION

(11) **EP 4 391 624 A2**
(43) Date of publication of application: **26.06.2024**
(21) Application number: 24157801.2
(22) Date of filing: 23.09.2019
(51) Int. Cl.: H04W 16/28

(54) **BEAM FAILURE RECOVERY PROCESSING METHOD AND DEVICE**

(30) Priority: 21.09.2018 CN 201811110793
(62) Divisional of application: 19863139.2
(71) Applicant: ZTE Corporation, Shenzhen, Guangdong 518057 (CN)
(72) Inventor: ZHANG, Shujuan, Shenzhen, 518057 (CN); GAO, Bo, Shenzhen, 518057 (CN); LU, Zhaohua, Shenzhen, 518057 (CN); LI, Yu Ngok, Shenzhen, 518057 (CN); CHEN, Yijian, Shenzhen, 518057 (CN); YANG, Wei, Shenzhen, 518057 (CN); XIE, Wusheng, Shenzhen, 518057 (CN)
(74) Representative: Vossius & Partner Patentanwälte Rechtsanwälte mbB

(57) **Abstract**

Provided are a method and apparatus for processing beam failure recovery. The method for processing beam failure recovery includes: in response to frequency domain bandwidth part being switched, performing a predetermined operation on a beam failure recovery process.

## Description

This application claims priority to Chinese Patent Application No. 201811110793.7 filed with the CNIPA on Sep. 21, 2018, the disclosure of which is incorporated herein by reference in its entirety.

### TECHNICAL FIELD

The present disclosure relates to the field of communication, for example, a method and apparatus for processing beam failure recovery.

### BACKGROUND

The core technology in 5th-Generation New Radio (5G-NR) is data transmission based on highfrequency communication. Large-bandwidth data communication can be provided at high frequency band. One main characteristic of high frequencies is that the fading is relatively large. Since an antenna at high frequencies is relatively small, high-gain beams can be formed by large-scale antenna arrays.

A core problem of beam-based communication is beam coverage. A control channel sent by a base station to a terminal can only ensure partial coverage. After all the beams of the control channel of a terminal fail, the base station will not be able to send control information to the terminal. To recover link communication quickly, the terminal needs to perform a beam failure recovery process, so the beam failure recovery process is introduced into 5G-NR.

However, a beam failure recovery process after a switch of a bandwidth part does not exist in the related art; how to effectively perform a beam failure recovery process when multiple transmission points serve one terminal, especially when no ideal backhaul exists between the multiple transmission points, does not exist in the related art.

### SUMMARY

A method for processing beam failure recovery is provided according to an embodiment of the present disclosure. The method includes: in response to frequency domain bandwidth part being switched, performing a predetermined operation on a beam failure recovery process.

A method for processing beam failure recovery is provided according to an embodiment of the present disclosure. The method includes: deciding whether an association exists between a switch of frequency domain bandwidth part and a beam failure recovery process; and performing, according to a decision result, at least one of: the beam failure recovery process or the switch of the frequency domain bandwidth part.

A method for processing beam failure recovery is provided according to an embodiment of the present disclosure. The method includes: determining a beam failure recovery parameter correspondence between N sets of first-type beam failure recovery parameters and M sets of second-type beam failure recovery parameters; and performing, according to the beam failure recovery parameter correspondence, at least one of: a beam failure recovery process or a switch of frequency domain bandwidth part; where each of N and M is a positive integer.

A method for processing beam failure recovery is provided according to an embodiment of the present disclosure. The method includes: performing a beam failure recovery process according to at least one of a beam failure recovery parameter or a preset rule, where the beam failure recovery parameter satisfies the preset rule.

An apparatus for processing beam failure recovery is provided according to an embodiment of the present disclosure. The apparatus includes a processing module configured to: in response to frequency domain bandwidth part being switched, perform a predetermined operation on a beam failure recovery process.

An apparatus for processing beam failure recovery is provided according to an embodiment of the present disclosure. The apparatus includes a decision module and a switch module. The decision module is configured to decide whether an association exists between a switch of frequency domain bandwidth part and a beam failure recovery process. The switch module is configured to perform, according to a decision result, at least one of: a beam failure recovery process or a switch of frequency domain bandwidth part.

An apparatus for processing beam failure recovery is provided according to an embodiment of the present disclosure. The apparatus includes a determination module and an operation module. The determination module is configured to determine a beam failure recovery parameter correspondence between N sets of first-type beam failure recovery parameters and M sets of second-type beam failure recovery parameters. The operation module is configured to perform, according to the beam failure recovery parameter correspondence, at least one of: a beam failure recovery process or a switch of frequency domain bandwidth part; where N and M are each a positive integer.

An apparatus for processing beam failure recovery is provided according to an embodiment of the present disclosure. The apparatus includes a recovery module configured to perform a beam failure recovery process according to at least one of a beam failure recovery parameter or a preset rule, where the beam failure recovery parameter satisfies the preset rule.

A storage medium is further provided according to another embodiment of the present disclosure and stores a computer program. When the computer program is executed, the steps in any one of the preceding method embodiments are performed.

An electronic apparatus is further provided according to another embodiment of the present disclosure. The electronic apparatus includes a memory and a processor. The memory stores a computer program, and the processor is configured to execute the computer program to perform the steps in any one of the preceding method embodiments.

### BRIEF DESCRIPTION OF DRAWINGS

FIG. 1 is a block diagram illustrating a hardware structure of a mobile terminal according to an embodiment of the present disclosure;
FIG. 2 is a flowchart of a method for processing beam failure recovery according to an embodiment of the present disclosure;
FIG. 3 is a flowchart of another method for processing beam failure recovery according to an embodiment of the present disclosure;
FIG. 4 is a flowchart of another method for processing beam failure recovery according to an embodiment of the present disclosure;
FIG. 5 is schematic diagram one illustrating a beam failure recovery parameter correspondence between N sets of first-type beam failure recovery parameters and M sets of second-type beam failure recovery parameters according to an embodiment of the present disclosure;
FIG. 6 is schematic diagram two illustrating a beam failure recovery parameter correspondence between N sets of first-type beam failure recovery parameters and M sets of second-type beam failure recovery parameters according to an embodiment of the present disclosure;
FIG. 7 is schematic diagram three illustrating a beam failure recovery parameter correspondence between N sets of first-type beam failure recovery parameters and M sets of second-type beam failure recovery parameters according to an embodiment of the present disclosure;
FIG. 8 is schematic diagram four illustrating a beam failure recovery parameter correspondence between N sets of first-type beam failure recovery parameters and M sets of second-type beam failure recovery parameters according to an embodiment of the present disclosure;
FIG. 9 is schematic diagram five illustrating a beam failure recovery parameter correspondence between N sets of first-type beam failure recovery parameters and M sets of second-type beam failure recovery parameters according to an embodiment of the present disclosure;
FIG. 10 is a flowchart of another method for processing beam failure recovery according to an embodiment of the present disclosure;
FIG. 11 is a flowchart of implementing a beam failure recovery process according to an embodiment of the present disclosure;
FIG. 12 is schematic diagram one of frequency domain bandwidth part (BWP) switch happened during a beam failure indication information reporting period according to an embodiment of the present disclosure;
FIG. 13 is schematic diagram two of a BWP switch happened during a beam failure indication information reporting period according to an embodiment of the present disclosure;
FIG. 14 is schematic diagram one of multiple frequency domain bandwidth parts corresponding to one beam failure process according to an embodiment of the present disclosure;
FIG. 15 is schematic diagram two of multiple frequency domain bandwidth parts corresponding to one beam failure process according to an embodiment of the present disclosure;
FIG. 16 is schematic diagram one of each of multiple downlink frequency domain bandwidth parts respectively corresponding to respective beam failure recovery processes according to an embodiment of the present disclosure;
FIG. 17 is schematic diagram two of each of multiple downlink frequency domain bandwidth parts respectively corresponding to respective beam failure recovery processes according to an embodiment of the present disclosure;
FIG. 18 is schematic diagram three of each of multiple downlink frequency domain bandwidth parts respectively corresponding to respective beam failure recovery processes according to an embodiment of the present disclosure;
FIG. 19 is a schematic diagram of a downlink BWP according to an embodiment of the present disclosure;
FIG. 20 is a schematic diagram of an interaction between transmission reception points according to an embodiment of the present disclosure;
FIG. 21 is a block diagram illustrating a structure of an apparatus for processing beam failure recovery according to an embodiment of the present disclosure;
FIG. 22 is a block diagram illustrating a structure of another apparatus for processing beam failure recovery according to an embodiment of the present disclosure;
FIG. 23 is a block diagram illustrating a structure of another apparatus for processing beam failure recovery according to an embodiment of the present disclosure; and
FIG. 24 is a block diagram illustrating a structure of another apparatus for processing beam failure recovery according to an embodiment of the present disclosure.

### DETAILED DESCRIPTION

The present disclosure will be hereinafter described in detail with reference to drawings in conjunction with embodiments. It is to be noted that if not in collision, the embodiments and features therein hereinafter may be combined with each other.

It is to be noted that the terms "first", "second" and the like in the description, claims and the preceding drawings of the present disclosure are used to distinguish between similar objects but not necessarily used to describe a particular order or sequence.

A method and apparatus for processing beam failure recovery are provided in the embodiments of the present disclosure so as to solve at least the problem in the related art that beam failure recovery is difficult in cases where a bandwidth part handover exists and multiple transmission nodes serve one terminal.

### Embodiment one

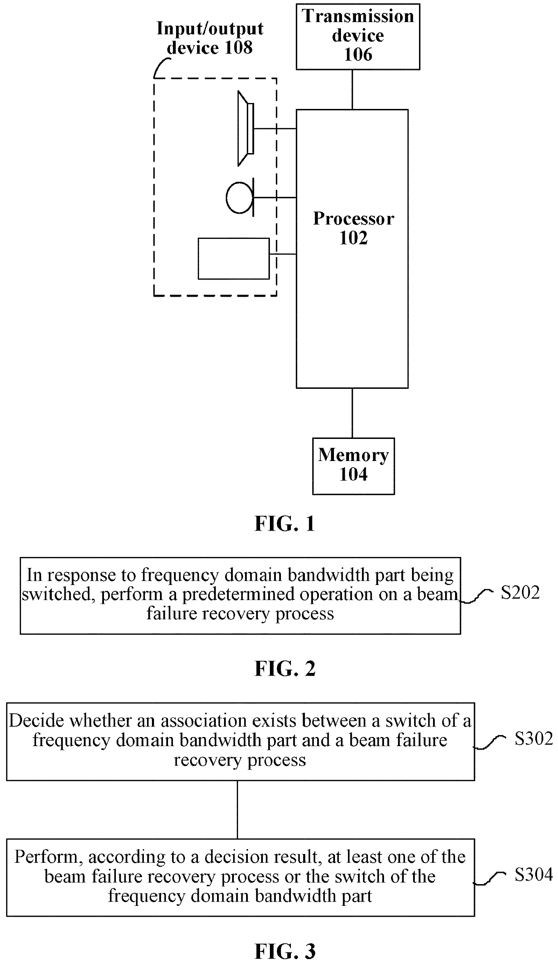

The method embodiment provided in embodiment one of the present application may be performed by a mobile terminal, a computer terminal or other similar computing apparatuses. The method to be executed in the mobile terminal is used as an example; FIG. 1 is a block diagram illustrating a hardware structure of a mobile terminal according to an embodiment of the present disclosure. As shown in FIG. 1, a mobile terminal 10 may include one or more (merely one is shown in FIG. 1) processors 102 (the processors 102 may include, but are not limited to, a microprocessor such as a microcontroller unit (MCU), a programmable logic device such as a field-programmable gate array (FPGA), and other processing apparatuses), and a memory 104 used for storing data. Optionally, the preceding mobile terminal may further include a transmission device 106 for a communication function and an input/output device 108. It is to be understood by those having ordinary skill in the art that the structure shown in FIG. 1 is merely illustrative and not intended to limit the structure of the preceding mobile terminal. For example, the mobile terminal 10 may further include more or fewer components than the components shown in FIG. 1 or may have a configuration different from the configuration shown in FIG. 1.

The memory 104 may be configured to store a computer program such as a software program and a module of application software, for example, the computer program corresponding to the method for processing beam failure recovery in the embodiment of the present disclosure. The processor 102 executes the computer program stored in the memory 104 to perform various functional applications and data processing, that is, to implement the preceding method. The memory 104 may include a high-speed random access memory and may further include a nonvolatile memory such as one or more magnetic storage apparatuses, flash memories or other nonvolatile solid-state memories. In some examples, the memory 104 may further include memories that are disposed remote from the one or more processors 102. These remote memories may be connected to the mobile terminal 10 via a network. The examples of the preceding network include, but are not limited to, the Internet, an intranet, a local area network, a mobile communication network, and a combination thereof.

The transmission device 106 is configured to receive or send data via a network. Specific examples of such a network described above may include a wireless network provided by a communication provider of the mobile terminal 10. In one example, the transmission device 106 includes a network interface controller (NIC) which may be connected to other network devices via a base station and thus is capable of communicating with the Internet. In one example, the transmission device 106 may be a radio frequency (RF) module which is used for communicating with the Internet in a wireless manner.

This embodiment provides a method for processing beam failure recovery executed on the preceding mobile terminal. FIG. 2 is a flowchart of a method for processing beam failure recovery according to an embodiment of the present disclosure. As shown in FIG. 2, the method includes the steps described below.

In step S202, in response to frequency domain bandwidth part being switched, a predetermined operation on a beam failure recovery process is performed.

A timer in the following description includes at least one of: a beam failure detection timer, a beam failure recovery timer or a response monitoring timer.

A counter in the following description includes at least one of: a beam failure detection counter or a reference signal indication information sending counter.

In an embodiment, the beam failure detection timer is used for controlling the interval between two consecutive beam failure indications. It is to be noted that if the duration of the interval exceeds the full time of the beam failure detection timer and is greater than the full time of the beam failure detection timer, i.e. the time distance between the two consecutive beam failure indications is very long, and therefore, accumulation is not performed in the subsequent process.

In an embodiment, the beam failure recovery timer is used for controlling the length of time from the first start of new-beam reporting to a current beam failure recovery process. It is to be noted that if the beam failure recovery timer expires, the terminal can also stop sending information about the new beam to a base station even if the information about the new beam is not successfully sent.

In an embodiment, the response monitoring timer is used for controlling the duration from the time when the terminal sends a physical random access channel (PRACH) to the time when monitoring the response of the base station is terminated. It is to be noted that if the response monitoring timer expires, even if no response from the base station is received, the terminal will no longer perform monitoring and it is regarded that the PRACH sequence fails to be sent.

In an embodiment, the beam failure detection counter is used for accumulating beam failure indications received from a physical layer. A beam failure event is considered to occur only when the beam failure detection counter reaches a preset count number, indicating the terminal to select a new beam (that is, select a reference signal) and send the PRACH to the base station according to a PRACH resource associated with the selected new beam.

In an embodiment, when the reference signal indication information sending counter counts overtime, the count is increased by 1 if the terminal sends a PRACH and does not detect a physical downlink control channel (PDCCH) in search space for beam failure recovery (SS-BFR).

It is to be noted that the timer parameter is the maximum duration corresponding to the timer.

When the duration after the timer is started exceeds the maximum duration corresponding to the timer, the timer expires. The counter parameter is the threshold corresponding to the counter. When the count of the counter is greater than or equal to the threshold, a predetermined operation is performed.

In an embodiment, if the terminal detects that the performance parameter of at least one reference signal among the reference signals in a beam failure detection reference signal set is not less than a preset performance threshold, it is regarded that no beam failure is detected, and meanwhile a reference signal in the beam failure detection reference signal set continues to be detected in real time. However, if the performance parameters of all the reference signals in the beam failure detection reference signal set are less than the preset performance threshold, it is regarded that a beam failure is detected, and the physical layer of the terminal reports beam failure indication information to a media access control (MAC) layer. At this time, the count value of the beam failure detection counter is increased by 1.

Then, if the count value of the beam failure detection counter for the selected new beam reaches a preset count threshold, the MAC layer of the terminal instructs the physical layer to select reference signals whose performance parameters are greater than a preset performance threshold from a candidate reference signal set and reports the resource index information of these reference signals and the reference signal receiving power (RSRP) of the reference signals to the MAC layer.

In an embodiment, the reference signal mentioned above includes at least one of: a measurement reference signal, a demodulation reference signal or a synchronisation signal. In an embodiment, in response to the frequency domain bandwidth part being switched, a first-type predetermined operation is performed on the beam failure recovery process. The first-type predetermined operation includes at least one of: updating a beam failure detection reference signal set so as to use a beam failure detection reference signal set in frequency domain bandwidth part after being switched; updating a candidate reference signal set so as to use a candidate reference signal set in frequency domain bandwidth part after being switched; an initial value of a timer in frequency domain bandwidth part after being switched being a state value of a timer in frequency domain bandwidth part before being switched; an initial value of a counter in frequency domain bandwidth part after being switched being a state value of a counter in frequency domain bandwidth part before being switched; determining a first correspondence between a first-type reference signal and a second-type reference signal, where the first-type reference signal belongs to a beam failure detection reference signal set in the frequency domain bandwidth part before being switched, and the second-type reference signal belongs to a beam failure detection reference signal set in the frequency domain bandwidth part after being switched; or determining a second correspondence between a third-type reference signal and a fourth-type reference signal, where the third-type reference signal belongs to a candidate reference signal set in the frequency domain bandwidth part before being switched, and the fourth-type reference signal belongs to a candidate reference signal set in the frequency domain bandwidth part after being switched.

In an embodiment, the beam failure detection reference signal set is a reference signal set for beam failure detection.

In an embodiment, in response to the frequency domain bandwidth part being switched, a second-type predetermined operation is performed on the beam failure recovery process. The second-type predetermined operation includes at least one of: updating a beam failure detection reference signal set so as to use a beam failure detection reference signal set in frequency domain bandwidth part after being switched; updating a candidate reference signal set so as to use a candidate reference signal set in frequency domain bandwidth part after being switched; stopping a timer; or setting a counter to 0.

The frequency domain bandwidth part being switched satisfies at least one of the following: the frequency domain bandwidth part before being switched and the frequency domain bandwidth part after being switched corresponding to a same beam failure recovery process; the frequency domain bandwidth part before being switched and the frequency domain bandwidth part after being switched corresponding to a same timer; the frequency domain bandwidth part before being switched and the frequency domain bandwidth part after being switched corresponding to a same counter; no correspondence existing between frequency domain bandwidth part index information and reference signal indication information in the beam failure recovery process; or an association existing between a beam failure recovery parameter in the frequency domain bandwidth part before being switched and a beam failure recovery parameter in the frequency domain bandwidth part after being switched.

The association existing between the beam failure recovery parameter in the frequency domain bandwidth part before being switched and the beam failure recovery parameter in the frequency domain bandwidth part after being switched includes at least one of the following: a configuration parameter of the timer in the frequency domain bandwidth part before being switched being the same as a configuration parameter of the timer in the frequency domain bandwidth part after being switched; a configuration parameter of the counter in the frequency domain bandwidth part before being switched being the same as a configuration parameter of the counter in the frequency domain bandwidth part after being switched; or the frequency domain bandwidth part before being switched and the frequency domain bandwidth part after being switched sharing configuration information of one set of beam failure recovery parameters.

In an embodiment, in response to the frequency domain bandwidth part being switched, a third-type predetermined operation is performed on the beam failure recovery process. The third-type predetermined operation includes at least one of the following: starting or restarting a beam failure recovery process corresponding to frequency domain bandwidth part after being switched; unlocking a suspended beam failure recovery process corresponding to frequency domain bandwidth part after being switched; suspending a beam failure recovery process corresponding to the frequency domain bandwidth part before being switched; suspending accumulation in a counter corresponding to the frequency domain bandwidth part before being switched; unlocking a counter corresponding to frequency domain bandwidth part after being switched and accumulation in which is suspended; in response to a counter corresponding to frequency domain bandwidth part after being switched being not started, starting the counter corresponding to the frequency domain bandwidth part after being switched; a timer corresponding to the frequency domain bandwidth part before being switched continuing to operate in a corresponding time period in response to frequency domain bandwidth part after being switched being in an active state; suspending a timer corresponding to the frequency domain bandwidth part before being switched; unlocking a suspended timer corresponding to frequency domain bandwidth part after being switched; in response to a timer corresponding to frequency domain bandwidth part after being switched being not started, starting the timer corresponding to the frequency domain bandwidth part after being switched; suspending an operation of reporting reference signal indication information, where a reference signal corresponding to the reference signal indication information belongs to a candidate reference signal set corresponding to the frequency domain bandwidth part before being switched; unlocking a suspended operation of reporting reference signal indication information, where a reference signal corresponding to the reference signal indication information belongs to a candidate reference signal set corresponding to frequency domain bandwidth part after being switched; suspending an operation of monitoring a control channel in a beam failure search space, where the control channel includes confirmation information that reference signal indication information corresponding to the frequency domain bandwidth part before being switched is successfully reported; unlocking a suspended operation of monitoring a control channel in a beam failure search space, where the control channel includes confirmation information that reference signal indication information corresponding to frequency domain bandwidth part after being switched is successfully reported; updating a beam failure detection reference signal set so as to use a beam failure detection reference signal set corresponding to frequency domain bandwidth part after being switched; or updating a candidate reference signal set so as to use a candidate reference signal set corresponding to frequency domain bandwidth part after being switched.

In an embodiment, in response to the frequency domain bandwidth part being switched, a fourth-type predetermined operation is performed on the beam failure recovery process. The fourth-type predetermined operation includes at least one of: starting or restarting a beam failure recovery process corresponding to frequency domain bandwidth part after being switched; a beam failure recovery process corresponding to the frequency domain bandwidth part before being switched continuing to operate in frequency domain bandwidth part after being switched; accumulation in a counter corresponding to the frequency domain bandwidth part before being switched continuing in a frequency domain bandwidth after being switched; in response to a counter corresponding to frequency domain bandwidth part after being switched being not started, starting the counter corresponding to the frequency domain bandwidth part after being switched; a timer corresponding to the frequency domain bandwidth part before being switched continuing to operate in a corresponding time period in response to frequency domain bandwidth part after being switched being in an active state; reporting, in frequency domain bandwidth part after being switched, reference signal indication information corresponding to the frequency domain bandwidth part before being switched; monitoring a control channel in a beam failure search space in frequency domain bandwidth part after being switched, where the control channel includes confirmation information that reference signal indication information corresponding to the frequency domain bandwidth part before being switched is successfully reported; or monitoring a control channel in a control resource set-beam failure recovery corresponding to the frequency domain bandwidth part comprised in frequency domain bandwidth part after being switched, where the control channel includes confirmation information that reference signal indication information corresponding to the frequency domain bandwidth part before being switched is successfully reported, where y control resource set-beam failure recoveries are comprised in the frequency domain bandwidth part after being switched, the y control resource set-beam failure recoveries correspond to y frequency domain bandwidth parts, and y is a positive integer not less than 1.

In an embodiment, if a corresponding beam failure detection timer expires during an accumulation suspension process of the beam failure detection counter, the beam failure detection counter may be set to 0.

In an embodiment, if the beam failure detection counter is unlocked after accumulation is suspended, the accumulation function of the beam failure detection counter is unlocked, and the initial value of the beam failure detection counter is the count value of the beam failure detection counter at the time of suspension.

In an embodiment, if the timer is unlocked after being suspended, the timer starts operating again, and the time count at the time of suspension is used as the initial value of the time count of the timer that starts operating.

In an embodiment, if the timer is started after being stopped, the timer starts operating again, and the time count of the timer that starts operating is the maximum value or 0 corresponding to the timer.

In an embodiment, if a beam failure recovery process is unlocked after being suspended, the beam failure recovery process starts again, and the timer, counter and reference signal set corresponding to the beam failure recovery process are in the states at the time of suspension.

It is to be noted that if the occurrence of a beam failure event is detected, that is, the count of the beam failure detection counter of the MAC layer of the terminal is greater than or equal to a predetermined threshold, the terminal needs to report, on a beam failure reporting resource, indication information of a reference signal selected from the candidate reference signal set. It is to be noted that the detection of the occurrence of a beam failure event also indicates that the count of the beam failure detection counter obtained according to the parameters of a beam failure detection reference signal set, the beam failure detection timer and the beam failure detection counter is greater than or equal to a pre-detection detection threshold.

In an embodiment, the y control resource set-beam failure recoveries corresponding to y frequency domain bandwidth parts satisfies at least one of the following conditions: a quasi-co-location reference signal of each control resource set-beam failure recovery is determined according to reference signal indication information corresponding to frequency domain bandwidth part corresponding to the each control resource set-beam failure recovery; a quasi-co-location reference signal of a downlink data channel scheduled by each control resource set-beam failure recovery is determined according to reference signal indication information corresponding to frequency domain bandwidth part corresponding to the each control resource set-beam failure recovery; or a spatial filtering parameter of an uplink channel or signal scheduled by each control resource set-beam failure recovery is determined according to a spatial filtering parameter for sending reference signal indication information corresponding to frequency domain bandwidth part corresponding to the each control resource set-beam failure recovery.

A step of reporting, in the frequency domain bandwidth part after being switched, the reference signal indication information corresponding to the frequency domain bandwidth part before being switched includes: transmitting, in higher-layer signaling, the reference signal indication information corresponding to the frequency domain bandwidth part before being switched. Z sets of physical layer reporting resources are at least included in the frequency domain bandwidth part after being switched and correspond to Z frequency domain bandwidth parts, and reference signal indication information corresponding to frequency domain bandwidth part is reported in a reporting resource corresponding to the frequency domain bandwidth part. The physical layer reporting resources include at least one of: a physical random access channel (PRACH) resource, a physical uplink control channel (PUCCH) resource or a physical uplink shared channel (PUSCH) resource. At least one reporting resource in a physical layer reporting resource set in the frequency domain bandwidth part after being switched corresponds to a reference signal in a candidate reference signal set corresponding to the frequency domain bandwidth part before being switched. The step further includes reporting the reference signal indication information and frequency domain bandwidth part index information. The frequency domain bandwidth part index information is configured for indicating at least one of: frequency domain bandwidth part where the reported reference signal indication information is located or detection of a beam failure event according to a beam failure detection reference signal corresponding to frequency domain bandwidth part where the frequency domain bandwidth part index information is located.

The method includes at least one of the following: the frequency domain bandwidth part before being switched and the frequency domain bandwidth part after being switched each corresponding to one beam failure recovery process; the frequency domain bandwidth part before being switched and the frequency domain bandwidth part after being switched each corresponding to one timer; the frequency domain bandwidth part before being switched and the frequency domain bandwidth part after being switched each corresponding to one counter; a correspondence existing between frequency domain bandwidth part index information and reference signal indication information in the beam failure recovery process; or the frequency domain bandwidth part before being switched and the frequency domain bandwidth part after being switched each corresponding to information about one set of beam failure recovery parameters.

The handover of the frequency domain bandwidth part includes at least one of: a switch of downlink frequency domain bandwidth part being switched; a switch of uplink frequency domain bandwidth part being switched; or a switch of frequency domain bandwidth part in a component carrier (CC) being switched.

The timer includes at least one of: a beam failure detection timer, a beam failure recovery timer or a response monitoring timer. The counter includes at least one of: a beam failure detection counter or a reference signal indication information sending counter. A count value of the beam failure detection counter includes a sum of a beam failure detection count obtained according to the beam failure detection reference signal set in the frequency domain bandwidth part before being switched and a beam failure detection count obtained according to the beam failure detection reference signal set in the frequency domain bandwidth part after being switched.

A type of the predetermined operation is determined in a following manner: the type of the predetermined operation is determined according to signaling information. The predetermined operation is applied to a switch between any two frequency domain bandwidth parts or a switch between two specified frequency domain bandwidth parts.

The method further includes determining whether a type of the predetermined operation is the first-type predetermined operation in at least one of the manners described below. It is decided whether the first correspondence is satisfied between the first-type reference signal and the second-type reference signal, and the type of the predetermined operation is determined according to a decision result. The first-type reference signal belongs to a first beam failure detection reference signal set in the frequency domain bandwidth part before being switched, and the second-type reference signal belongs to a second beam failure detection reference signal set in the frequency domain bandwidth part after being switched. Alternatively, it is decided whether the second correspondence is satisfied between the third-type reference signal and the fourth-type reference signal, and the type of the predetermined operation is determined according to a decision result. The third-type reference signal belongs to a first candidate reference signal set in the frequency domain bandwidth part before being switched, and the fourth-type reference signal belongs to a second candidate reference signal set in the frequency domain bandwidth part after being switched.

In an embodiment, in response to a correspondence existing between a reference signal in a first reference signal set and a reference signal in a second reference signal set, the first-type predetermined operation is adopted; and in response to each reference signal in the first reference signal set having a correspondence with at least one reference signal in the second reference signal set, the first-type predetermined operation is adopted. The first reference signal set is the first beam failure detection reference signal set, the second reference signal set is the second beam failure detection reference signal set, and the correspondence is the first correspondence; and/or the first reference signal set is the first candidate reference signal set, the second reference signal set is the second candidate reference signal set, and the correspondence is the second correspondence.

At least one of the following is satisfied between two reference signals having a reference signal correspondence: link performance of a link is determined according to the two reference signals having the reference signal correspondence; the two reference signals having the reference signal correspondence satisfy a quasi-co-location relationship with respect to one or more quasi-co-location parameters; or the two reference signals having the reference signal correspondence are associated with a same reporting resource. The reference signal correspondence includes at least one of: the first correspondence or the second correspondence. The two reference signals having the reference signal correspondence include at least one of: the first-type reference signal and the second-type reference signal having the first correspondence or the third-type reference signal and the fourth-type reference signal having the second correspondence.

In an embodiment, the reporting resource is a reporting resource for reporting indication information of a reference signal selected in the candidate reference signal set.

In an embodiment, the preceding quasi-co-location parameter includes at least one of: Doppler shift, Doppler spread, average delay, delay spread, an average gain or a spatial Rx parameter.

Through the preceding steps, the problem that beam failure recovery is difficult in cases where a bandwidth part handover exists and multiple transmission nodes serve one terminal is solved and thus the effect of effectively improving beam failure recovery can be achieved.

From the description of the preceding embodiment, it will be apparent to those skilled in the art that the method in the preceding embodiment may be implemented by software plus a necessary general-purpose hardware platform or may of course be implemented by hardware. However, in many cases, the former is a preferred implementation. Based on this understanding, the technical solutions provided by the present disclosure substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device or the like) to execute the methods according to each embodiment of the present disclosure.

### Embodiment two

This embodiment provides another method for processing beam failure recovery executed on the preceding mobile terminal. FIG. 3 is a flowchart of another method for processing beam failure recovery according to an embodiment of the present disclosure. As shown in FIG. 3, the method includes the steps described below.

In step S302, it is decided whether an association exists between a switch of frequency domain bandwidth part and a beam failure recovery process.

In step S304, at least one of the beam failure recovery process or the handover of the frequency domain bandwidth part is performed according to a decision result.

The step in which at least one of the beam failure recovery process or the handover of the frequency domain bandwidth part is performed according to a decision result includes at least one of the steps described below. When the decision result is yes and when the handover of the frequency domain bandwidth part occurs, a predetermined operation is performed on the beam failure recovery process. When the decision result is yes and when the beam failure recovery process reaches a predetermined state, the handover of the frequency domain bandwidth part is performed. When the decision result is no and when the handover of the frequency domain bandwidth part occurs, the operation on the beam failure recovery process remains unchanged. When the decision result is no, the state of the beam failure recovery process is independent of the handover of the bandwidth part.

The step in which the switch of frequency domain bandwidth part is performed when the beam failure recovery process reaches a predetermined state includes at least one of the steps described below. When a beam failure event is detected and an uplink frequency domain bandwidth part where a reporting resource having a correspondence with a reference signal in a candidate reference signal set is in an inactive state, a switch is performed from the uplink frequency domain bandwidth part to the frequency domain bandwidth part where the reporting resource is located. When a beam failure event is detected and a downlink frequency domain bandwidth part where a reference signal included in a candidate reference signal set is in an inactive state, a switch is performed from the downlink frequency domain bandwidth part to the frequency domain bandwidth part where the reference signal included in the candidate reference signal set is located. After reference signal indication information is reported and when the frequency domain bandwidth part where a beam failure search space is located is in an inactive state, a switch is performed from a downlink frequency domain bandwidth part to the frequency domain bandwidth part where the beam failure search space is located. After a reference signal is selected in a candidate reference signal set and when the uplink frequency domain bandwidth part where a reporting resource corresponding to the selected reference signal is in an inactive state, a switch is performed from the uplink frequency domain bandwidth part to the uplink frequency domain bandwidth part where the reporting resource corresponding to the selected reference signal is located.

### Embodiment three

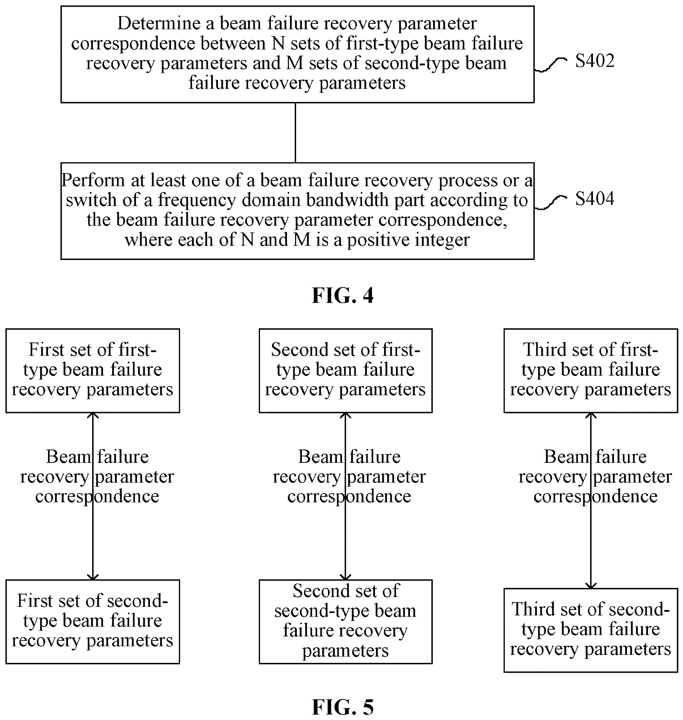

This embodiment provides another method for processing beam failure recovery executed on the preceding mobile terminal. FIG. 4 is a flowchart of another method for processing beam failure recovery according to an embodiment of the present disclosure. As shown in FIG. 4, the method includes the steps described below.

In step S402, a beam failure recovery parameter correspondence between N sets of first-type beam failure recovery parameters and M sets of second-type beam failure recovery parameters is determined.

In step S404, at least one of a beam failure recovery process or a switch of frequency domain bandwidth part is performed according to the beam failure recovery parameter correspondence.

Each of N and M is a positive integer.

The beam failure recovery parameter correspondence between N sets of first-type beam failure recovery parameters and M sets of second-type beam failure recovery parameters is determined, and the beam failure recovery process and/or the switch of frequency domain bandwidth part is performed according to the beam failure recovery parameter correspondence. Each of the N and M is a positive integer, and the sum of N and M is greater than or equal to 2.

The step of determining the beam failure recovery parameter correspondence between the N sets of first-type beam failure recovery parameters and the M sets of second-type beam failure recovery parameters includes at least one of the steps described below. The beam failure recovery parameter correspondence is determined according to information about the frequency domain bandwidth part. The beam failure recovery parameter correspondence is determined according to information about a control channel resource group. The beam failure recovery parameter correspondence is determined according to information about a CC or information about a CC group. A beam parameter correspondence is determined according to configuration information of a data channel. The beam failure recovery parameter correspondence is determined according to an index of a set of first-type beam failure recovery parameters among the N sets of first-type beam failure recovery parameters and an index of a set of second-type beam failure recovery parameters among the M sets of second-type beam failure recovery parameters. The beam failure recovery parameter correspondence exists between one set of second-type beam failure recovery parameters and each set of first-type beam failure recovery parameters among the N sets of first-type beam failure recovery parameters. The beam failure recovery parameter correspondence exists between one set of first-type beam failure recovery parameters and each set of second-type beam failure recovery parameters among the M sets of second-type beam failure recovery parameters. A second-type beam failure recovery parameter corresponding to each set of first-type beam failure recovery parameters is determined according to signaling information. An intersection between a parameter type set included in the first-type beam failure recovery parameters and a parameter type set included in the second-type beam failure recovery parameters is an empty set.

The step of determining the beam failure recovery parameter correspondence according to the information about the frequency domain bandwidth part includes at least one of the steps described below. In response to frequency domain bandwidth part corresponding to one set of first-type beam failure recovery parameters and frequency domain bandwidth part corresponding to one set of second-type beam failure recovery parameters having a same bandwidth part index, it is determined that the beam failure recovery parameter correspondence exists between the one set of first-type beam failure recovery parameters and the one set of second-type beam failure recovery parameters. In response to an intersection between a corresponding time resource in a case where frequency domain bandwidth part corresponding to one set of first-type beam failure recovery parameters is in an active state and a corresponding time resource in a case where frequency domain bandwidth part corresponding to one set of second-type beam failure recovery parameters is in an active state being not an empty set, it is determined that the beam failure recovery parameter correspondence exists between the one set of first-type beam failure recovery parameters and the one set of second-type beam failure recovery parameters.

In an embodiment, for example, according to the frequency domain bandwidth part where a candidate reference signal set of one set of second-type beam failure recovery parameters is located, a first-type beam failure recovery parameter having the beam failure recovery parameter correspondence with the one set of second-type beam failure recovery parameters is determined. For example, according to the frequency domain bandwidth part where a beam failure detection reference signal set of in one set of first-type beam failure recovery parameters is located, a second-type beam failure recovery parameter having the beam failure recovery parameter correspondence with the one set of first-type beam failure recovery parameters is determined. For example, according to the frequency domain bandwidth part where a beam failure search space of one set of second-type beam failure recovery parameters is located, a first-type beam failure recovery parameter having the beam failure recovery parameter correspondence with the one set of second-type beam failure recovery parameters is determined.

In an embodiment, a signal conflict indicates that the intersection of resources occupied by multiple signals is not an empty set or that the spatial domain resources occupied by multiple signals cannot be generated by the first communication node at the same time or that the intersection of the spatial domain resources occupied by multiple signals is an empty set. The resource includes at least one of: a time domain resource, a frequency domain resource, a code domain resource, a spatial domain resource, an antenna port or a quasi-co-location reference signal. One of the spatial resources corresponds to one spatial sending filtering parameter or to one quasi-co-location reference signal associated with a spatial Rx parameter. The conflict of multiple control channel resources also includes that the sum of the numbers of candidate control channels included in the multiple control channel resources exceed the number of candidate control channels that can be blindly detected by the first communication node in a time unit.

The step of determining, according to the signaling information, the second-type beam failure recovery parameter corresponding to the each set of first-type beam failure recovery parameters includes at least one of the following steps: notifying, in the signaling information, that the beam failure recovery parameter correspondence exists between one set of first-type beam failure recovery parameters and one or more sets of second-type beam failure recovery parameters among the M sets of second-type beam failure recovery parameters; or notifying, in the signaling information, that one reporting resource corresponds to Q candidate reference signals and that the Q candidate reference signals correspond to Q sets of first-type beam failure recovery parameters.

The step of performing, according to the beam failure recovery parameter correspondence, at least one of the beam failure recovery process or the switch of frequency domain bandwidth part includes: performing the beam failure recovery process according to one set of first-type beam failure recovery parameters, and in response to a predetermined event occurring in the beam failure recovery process, performing a fifth-type predetermined operation in the beam failure recovery process according to one or more sets of second-type beam failure recovery parameters having the beam failure recovery parameter correspondence with the one set of first-type beam failure recovery parameters.

In an embodiment, in a case where a beam failure event is detected according to one set of first-type beam failure recovery parameters and frequency domain bandwidth part corresponding to one set of second-type beam failure recovery parameters having the beam failure recovery parameter correspondence with the one set of first-type beam failure recovery parameters is in an inactive state, a switch is performed from frequency domain bandwidth part to frequency domain bandwidth part corresponding to a second-type beam failure recovery parameter having the beam failure recovery parameter correspondence with the one set of first-type beam failure recovery parameters.

The first-type beam failure recovery parameters include at least one of: a beam failure detection signal set, a maximum duration corresponding to a beam failure detection timer or a predetermined threshold corresponding to a beam failure detection counter. The second-type beam failure recovery parameters include at least one of: a candidate reference signal set, a reporting resource correspondence between a candidate reference signal set and a reporting resource, a beam failure search space, a predetermined threshold corresponding to a reference signal indication information sending counter, a maximum duration corresponding to a beam failure recovery timer or a maximum duration corresponding to a monitoring timer. The predetermined event in the beam failure recovery process is that the beam failure event is detected. The fifth-type predetermined operation includes at least one of: selecting a reference signal from the candidate reference signal set, reporting reference signal indication information in the reporting resource, monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.

FIG. 5 is schematic diagram one illustrating a beam failure recovery parameter correspondence between N sets of first-type beam failure recovery parameters and M sets of second-type beam failure recovery parameters according to an embodiment of the present disclosure. As shown in

FIG. 5, a terminal is configured with three sets of beam failure detection reference signals (that is, first-type beam failure recovery parameters) and three sets of {candidate reference signal sets, reporting resources, correspondences between reporting resources and candidate reference signals, beam failure search spaces, predetermined channels}. When the terminal detects the occurrence of a beam failure event according to an i-th beam failure detection reference signal set, the fifth preset operation is performed according to the i-th set of {candidate reference signal set, reporting resource, correspondence between a reporting resource and a candidate reference signal, beam failure search space, predetermined channel} which has the beam failure recovery parameter correspondence with the i-th beam failure detection reference signal set, where i = 1, 2, 3.

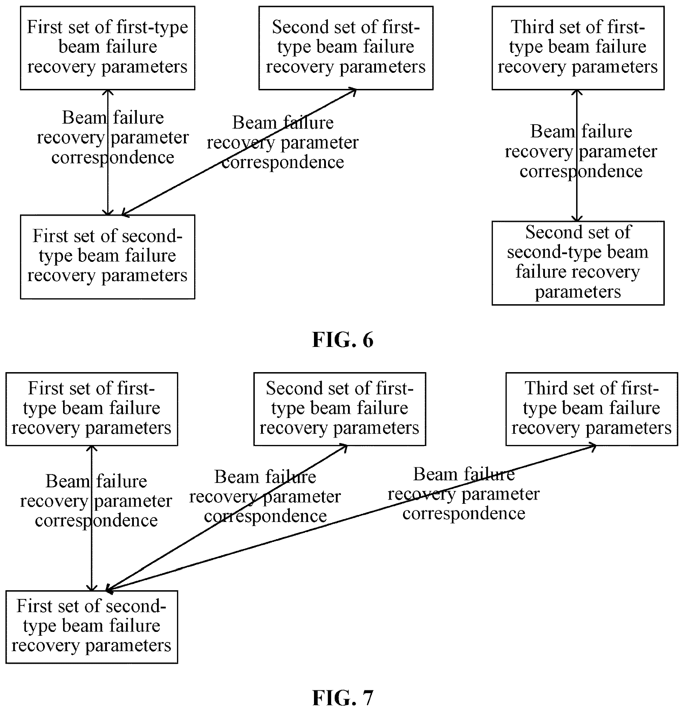

FIG. 6 is schematic diagram two illustrating a beam failure recovery parameter correspondence between N first-type beam failure recovery parameters and M second-type beam failure recovery parameters according to an embodiment of the present disclosure. In FIG. 6, both the first set of first-type beam failure recovery parameters and the second set of first-type beam failure recovery parameters correspond to the first set of second-type beam failure recovery parameters. When a beam failure event is detected according to a beam failure detection reference signal set in at least one of the first set or the second set, the fifth preset operation is performed according to {a candidate reference signal set, a reporting resource, a correspondence between a reporting resource and a candidate reference signal, a beam failure search space, a predetermined channel} in the first set.

FIG. 7 is schematic diagram three illustrating a beam failure recovery parameter correspondence between N first-type beam failure recovery parameters and M second-type beam failure recovery parameters according to an embodiment of the present disclosure. In FIG. 7, when a beam failure event is detected by a beam failure detection reference signal set in any one or more of the first to third sets, the fifth preset operation is performed according to {a candidate reference signal set, a reporting resource, a correspondence between a reporting resource and a candidate reference signal, a beam failure search space, a predetermined channel} in the first set.

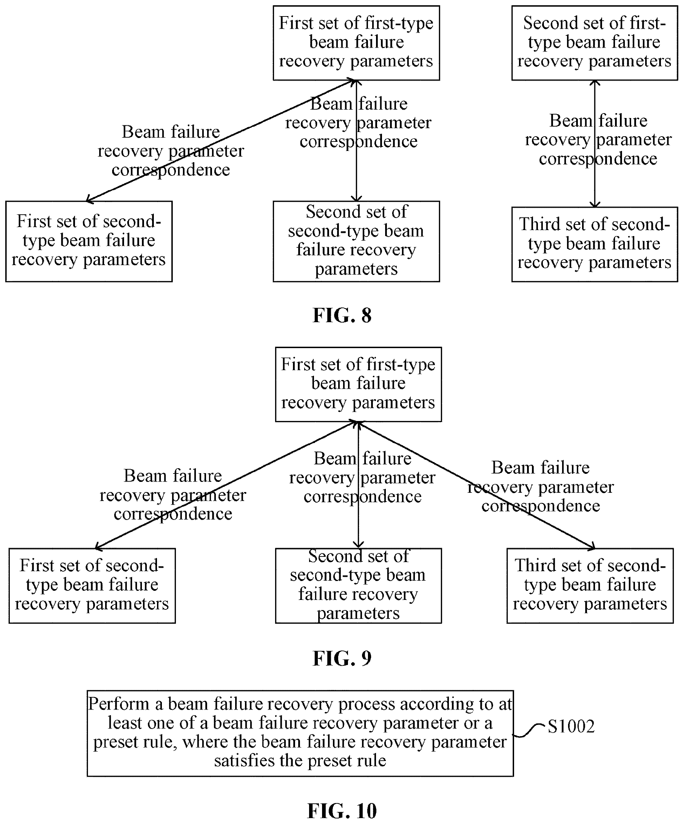

FIG. 8 is schematic diagram four illustrating a beam failure recovery parameter correspondence between N first-type beam failure recovery parameters and M second-type beam failure recovery parameters according to an embodiment of the present disclosure. In FIG. 8, one set of first-type beam failure recovery parameters corresponds to two sets of second-type beam failure recovery parameters. For example, when a beam failure event is detected according to a beam failure detection reference signal set in the first set of first-type beam failure recovery parameters, the fifth preset operation is performed according to {a candidate reference signal set, a reporting resource, a correspondence between a reporting resource and a candidate reference signal, a beam failure search space, a predetermined channel} in the first set or the second set.

FIG. 9 is schematic diagram five illustrating a beam failure recovery parameter correspondence between N first-type beam failure recovery parameters and M second-type beam failure recovery parameters according to an embodiment of the present disclosure. In FIG. 9, one set of first-type beam failure recovery parameters corresponds to three sets of second-type beam failure recovery parameters. For example, when a beam failure event is detected according to a beam failure detection reference signal set in the first set of first-type beam failure recovery parameters, the fifth preset operation is performed according to {a candidate reference signal set, a reporting resource, a correspondence between a reporting resource and a candidate reference signal, a beam failure search space, a predetermined channel} in the first set or the second set or the third set.

For example, if the frequency domain bandwidth where a resource corresponding to one set of second-type beam failure recovery parameters among the first to third sets of second-type beam failure recovery parameters is located is in an active state, the fifth preset operation is performed according to the one set of second-type beam failure recovery parameters. The different sets of first-type or second-type beam failure recovery parameters in FIGS. 5 to 9 correspond to different downlink control channel resource groups/bandwidth parts (BWPs)/CCs/BWP groups/CC groups/transmission reception points (TRPs), and three downlink control channel resource groups belong to one BWP.

The first-type beam failure recovery parameters include a candidate reference signal set. The second-type beam failure recovery parameters include at least one of: a reporting resource correspondence between the candidate reference signal set and a reporting resource, a reporting resource, a beam failure search space, a predetermined threshold corresponding to a reference signal indication information sending counter, a maximum duration corresponding to a beam failure recovery timer or a maximum duration corresponding to a monitoring timer. The predetermined event includes that a reference signal is selected in the candidate reference signal set. The fifth-type predetermined operation includes at least one of: reporting reference signal indication information in the reporting resource, monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.

Each of FIG. 5 to FIG. 9 illustrates a beam failure recovery parameter correspondence between N sets of first-type beam failure recovery parameters and M sets of second-type beam failure recovery parameters. In FIGS. 6 to 7, multiple candidate reference signal sets correspond to one set of reporting resources. Therefore, different reporting resources in one set of reporting resources may be associated with reference signals in different candidate signal sets, or one reporting resource in one set of reporting resources may be associated with more than one reference signal, where different reference signals belong to different candidate reference signal sets. In FIGS. 8 to 9, one candidate reference signal set corresponds to multiple reporting resources. When it is necessary to report the indication information of a selected reference signal in the one candidate reference signal set, the indication information of the selected reference signal is reported according to one or more of the multiple reporting resources. For example, the indication information of the selected reference signal is reported according to the reporting resource in an uplink BWP which is currently in an activate state. Alternatively, the reporting is performed according to the reporting resource in the uplink BWP having the shortest BWP switch delay with the uplink BWP currently in the active state among the uplink BWPs where multiple reporting resources are located.

The first-type beam failure recovery parameters include a reporting resource correspondence between a candidate reference signal set and a reporting resource. The second-type beam failure recovery parameters include a beam failure search space. The predetermined event includes that reference signal indication information is reported in a reporting resource obtained according to one set of first-type beam failure recovery parameters. The fifth-type predetermined operation includes at least one of: monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.

Each of FIG. 5 to FIG. 9 illustrates a beam failure recovery parameter correspondence between N sets of first-type beam failure recovery parameters and M sets of second-type beam failure recovery parameters.

In FIGS. 6 to 7, two candidate reference signal sets (or two sets of reporting resources) correspond to one beam failure search space. When the terminal can simultaneously report indication information of reference signals belonging to two candidate reference signal sets, the base station sends index information of the two candidate reference signal sets or reference signal indication information to the terminal in a control channel in one beam failure search space or a data channel scheduled by a control channel in one beam failure search space. The reference signal indication information is index information in a union of two candidate reference signal sets.

In FIGS. 8 to 9, one candidate control channel corresponds to multiple beam failure search spaces. For example, if a downlink BWP is currently in an active state, a control channel is monitored in the beam failure search space in the downlink BWP so as to determine whether the reference signal indication information is reported successfully. Alternatively, a control channel is monitored according to the beam failure search space in the downlink BWP having the shortest BWP switch delay with the downlink BWP currently in the active state among the downlink BWPs where multiple beam failure search spaces are located.

The first-type beam failure recovery parameters include a beam failure search space. The second-type beam failure recovery parameters include at least one of: information about a predetermined channel or information about a predetermined signal. The predetermined event includes monitoring a control channel in the beam failure search space. The fifth-type predetermined operation includes at least one of: determining quasi-co-location reference signal information of the predetermined channel according to reported reference signal indication information or determining a spatial transmitting filtering parameter of the predetermined channel or signal according to a spatial sending filtering parameter adopted when reference signal indication information is reported.

FIG. 5 to FIG. 9 each illustrate a beam failure recovery parameter correspondence between N sets of first-type beam failure recovery parameters and M sets of second-type beam failure recovery parameters.

In FIG. 5, one set of beam failure search spaces corresponds to one type of predetermined channel. In the process of detecting a control channel in the i-th set of beam failure search spaces, the quasi-co-location reference signal of the i-th type of downlink predetermined channel is obtained according to the indication information of a reference signal in the candidate reference signal set corresponding to the i-th set of beam failure search spaces. The spatial sending filter of the i-th uplink predetermined channel or signal is obtained according to the spatial sending filtering parameter used for sending the reference signal indication information corresponding to the i-th set of beam failure search spaces, where i = 1, 2, 3.

In FIGS. 6 to 7, multiple sets of beam failure search spaces correspond to one type of predetermined channel. In the process of monitoring a control channel in any one of the multiple sets of beam failure search spaces, a quasi-co-location reference signal of a downlink predetermined channel having a correspondence with the multiple sets of beam failure search spaces is obtained according to indication information of a reference signal in a candidate reference signal set corresponding to the beam failure search spaces. A spatial sending filter of an uplink predetermined channel having a correspondence with the multiple sets of beam failure search spaces is obtained according to a spatial sending filtering parameter used for sending reference signal indication information corresponding to the beam failure search spaces.

As shown in FIGS. 5 to 9, different sets of first-type or second-type beam failure recovery parameters correspond to different downlink control channel resource groupsBWPs/CCsBWP groups/CC groups/TRPs/data channel configuration information/uplink control channel configuration information/demodulation reference signal configuration information, and multiple downlink control channel resource groups belong to one BWP.

The step of the switching the frequency domain bandwidth part to the frequency domain bandwidth part corresponding to the second-type beam failure recovery parameter having the beam failure recovery parameter correspondence with the one set of first-type beam failure recovery parameters includes a step described below. In response to more than one frequency domain bandwidth part corresponding to the second-type beam failure recovery parameter having the beam failure recovery parameter correspondence with the one set of first-type beam failure recovery parameters existing, the handover is performed from the frequency domain bandwidth part to frequency domain bandwidth part whose frequency domain bandwidth part index satisfies a specified feature among the more than one frequency domain bandwidth part. Alternatively, in response to more than one second-type beam failure recovery parameter having the beam failure recovery parameter correspondence with the one set of first-type beam failure recovery parameters existing, the handover is performed from the frequency domain bandwidth part to frequency domain bandwidth part corresponding to a second-type beam failure recovery parameter having the beam failure recovery parameter correspondence with the one set of first-type beam failure recovery parameters and having an index satisfying a specified feature.

The N sets of first-type beam failure recovery parameters and the M sets of second-type beam failure recovery parameters satisfy at least one of the conditions described below. The N sets of first-type beam failure recovery parameters and the M sets of second-type beam failure recovery parameters are beam failure recovery parameters for one or more CCs. The N sets of first-type beam failure recovery parameters and the M sets of second-type beam failure recovery parameters are parameters in one or more beam failure recovery processes. The N sets of first-type beam failure recovery parameters correspond to N control channel resource groups. The M sets of second-type beam failure recovery parameters correspond to M control channel resource groups. The N sets of first-type beam failure recovery parameters correspond to N frequency domain bandwidth parts. The M sets of second-type beam failure recovery parameters correspond to M frequency domain bandwidth parts. The N sets of first-type beam failure recovery parameters correspond to N CCs. The M sets of second-type beam failure recovery parameters correspond to M CCs. The N sets of first-type beam failure recovery parameters correspond to N CC groups. The M sets of second-type beam failure recovery parameters correspond to M CC groups. The N sets of first-type beam failure recovery parameters correspond to N pieces of data channel configuration information. The M sets of second-type beam failure recovery parameters correspond to M pieces of data channel configuration information.

The method satisfies at least one of the conditions described below. The N control channel resource groups belong to one frequency domain bandwidth part. The M control channel resource groups belong to one frequency domain bandwidth part. The N frequency domain bandwidth parts belong to one CC, where N is not greater than the number of candidate frequency domain bandwidth parts included in the one CC and in a same transmission direction as the N frequency domain bandwidth parts. The M frequency domain bandwidth parts belong to a same CC, where M is not greater than the number of candidate frequency domain bandwidth parts included in the same CC and in a same transmission direction as the M frequency domain bandwidth parts. The N control channel resource groups and the M control channel resource groups belong to one frequency domain bandwidth part. The N frequency domain bandwidth parts and the M frequency domain bandwidth parts belong to one CC. The N frequency domain bandwidth parts include at least one of: an initial bandwidth part or a default bandwidth part. The M frequency domain bandwidth parts include at least one of: an initial bandwidth part or a default bandwidth part.

The first-type beam failure recovery parameters and/or the second-type beam failure recovery parameters satisfy at least one of the following conditions: the first-type beam failure recovery parameters are configured in configuration information of one uplink frequency domain bandwidth part; the second-type beam failure recovery parameters are configured in configuration information of one downlink frequency domain bandwidth part; resources corresponding to the first-type beam failure recovery parameters are located in one uplink frequency domain bandwidth part; or resources corresponding to the second-type beam failure recovery parameters are located in one downlink frequency domain bandwidth part. In an embodiment, the resource includes at least one of a resource occupied by a reference signal and a resource occupied by a channel.

The method satisfies at least one of the conditions described below. In a case where N = 1, the beam failure recovery parameter correspondence exists between the one set of first-type beam failure recovery parameters and the M sets of second-type beam failure recovery parameters. In a case where M = 1, the beam failure recovery parameter correspondence exists between the one set of second-type beam failure recovery parameters and the N sets of first-type beam failure recovery parameters. A beam failure recovery parameter correspondence exists between one set of second-type beam failure recovery parameters and A sets of first-type beam failure recovery parameters, where A is a positive integer not less than 1 and not greater than N. A beam failure recovery parameter correspondence exists between one set of first-type beam failure recovery parameters and B sets of second-type beam failure recovery parameters, where B is a positive integer not less than 1 and not greater than M. In response to the number A of sets of first-type beam failure recovery parameters having the beam failure recovery parameter correspondence with one set of second-type beam failure recovery parameters being greater than 1, set index information of the A sets of first-type beam failure recovery parameters is reported in a reporting source obtained according to the one set of second-type beam failure recovery parameters. In response to the number A of sets of first-type beam failure recovery parameters having the beam failure recovery parameter correspondence with one set of second-type beam failure recovery parameters being greater than 1, reference signal indication information or set index information of the A sets of first-type beam failure recovery parameters are included in a channel associated with a control resource set for beam failure recovery obtained according to the one set of second-type beam failure recovery parameters.

Set index information of the first-type beam failure recovery parameters is indicated by at least one of: index information of a frequency domain bandwidth corresponding to the first-type beam failure recovery parameters; information about a control channel resource group corresponding to the first-type beam failure recovery parameters; index information of a CC corresponding to the first-type beam failure recovery parameters; index information of a CC group corresponding to the first-type beam failure recovery parameters; or index information of data channel configuration information corresponding to the first-type beam failure recovery parameters.

The step of reporting the set index information of the A sets of first-type beam failure recovery parameters is configured for indicating at least one of the following pieces of information: the beam failure event being detected according to a beam failure detection reference signal set corresponding to the first-type beam failure recovery parameters corresponding to the set index information; or reported reference signal indication information being reference signal indication information corresponding to the set index information.

In an embodiment, after the reference signal indication information or the set index information of the A sets of first-type beam failure recovery parameters is received in the channel associated with the control resource set for beam failure recovery, a successful completion of an operation of reporting reference signal indication information corresponding to the set index information or the reference signal indication information is determined.

A correspondence exists between the set index information of the A sets of first-type beam failure recovery parameters and I sets of at least one of the following pieces of information of the channel associated with the control resource set for beam failure recovery obtained according to the one set of second-type beam failure recovery parameters: demodulation reference signal port information of the control channel; demodulation reference signal sequence information of the control channel; a time resource for monitoring the control channel; a scrambling sequence of the control channel; a format of control information carried in the control channel; demodulation reference signal information of a data channel; or scrambling sequence information of a data channel; where I is a positive integer less than or equal to A, the control channel is a control channel in the control resource set-beam failure recovery, and the data channel is a data channel scheduled by the control channel in the control resource set-beam failure recovery.

### Embodiment four

This embodiment provides another method for processing beam failure recovery executed on the preceding mobile terminal. FIG. 10 is a flowchart of another method for processing beam failure recovery according to an embodiment of the present disclosure. As shown in FIG. 10, the method includes the steps described below.

In step S1102, a beam failure recovery process is performed by a communication node according to at least one of a beam failure recovery parameter or a preset rule, where the beam failure recovery parameter satisfies the preset rule.

The preset rule includes at least one of the rules described below. A beam failure detection reference signal set and a candidate reference signal set are located in a same downlink frequency domain bandwidth part. An uplink frequency domain bandwidth part where a reporting resource is located has same bandwidth part index information as a downlink frequency domain bandwidth part where a beam failure search space is located. An intersection between a time resource for an uplink frequency domain bandwidth part in an active state where a reporting resource is located and a time resource for a downlink frequency domain bandwidth part in an active state where a beam failure search space is located is not an empty set. A beam failure detection reference signal set, a candidate reference signal set and a beam failure search space are located in a same downlink frequency domain bandwidth part. Configuration information of an association between a reporting resource and a candidate reference signal includes index information of a frequency domain bandwidth where the candidate reference signal is located. Configuration information of a beam failure detection reference signal includes an index of a frequency domain bandwidth where the beam failure detection reference signal is located. At least two reporting resources exist in a set formed by reporting resources included in one frequency domain bandwidth, where candidate reference signals associated with the two reporting resources have different frequency domain bandwidth indexes. y1 sets of control resource set-beam failure recovery are included in one frequency domain bandwidth, and the y1 sets of control resource set-beam failure recovery correspond to y2 sets of third-type beam failure recovery parameters, where the third-type beam failure recovery parameters include at least one of: a beam detection reference signal set, a candidate reference signal set or a reporting resource set, where y1 and y2 are positive integers. One reference signal resource is associated with more than one downlink frequency domain bandwidth part, and the one reference signal resource occupies a resource in the more than one downlink frequency domain bandwidth part, where the one reference signal resource corresponds to one reference signal resource identifier (ID), and the one reference signal resource includes at least one of: a beam failure detection reference signal resource or a candidate reference signal resource.

In an embodiment, one frequency domain bandwidth includes one frequency domain bandwidth part, that is, BWP, or one frequency domain bandwidth corresponds to one component carrier ,i.e one frequency domain bandwidth corresponds to one CC. One piece of frequency domain bandwidth index information includes at least one of a piece of BWP index information or a piece of CC index information.

The preset rule includes at least one of the rules described below. A downlink initial frequency domain bandwidth part or a downlink default bandwidth part includes at least one of: a beam failure detection reference signal set, a candidate reference signal set or a beam failure search space. An uplink initial frequency domain bandwidth part or an uplink default bandwidth part includes a reporting resource. Reference signals in a beam failure detection reference signal set are located in a same downlink frequency domain bandwidth. At least two reference signals exist in a candidate reference signal set, and two reference signals are located in two different frequency domain bandwidths. At least one downlink frequency domain bandwidth part includes at least one of: a beam failure detection reference signal set, a candidate reference signal set or a beam failure search space. Each downlink frequency domain bandwidth part located in one component carrier (CC) includes at least one of: a beam failure detection reference signal set, a candidate reference signal set, a beam failure search space, a beam failure detection timer or a beam failure detection timer. Each uplink frequency domain bandwidth part located in one CC includes at least one of: a reporting resource, a correspondence between a reporting resource and a candidate reference signal set, a beam failure recovery timer or a beam failure monitoring timer.

The preset rule includes at least one of the rules described below. One beam failure detection reference signal set corresponds to X candidate reference signal sets, and the X candidate reference signal sets are located in X downlink frequency domain bandwidths, respectively. One candidate reference signal set corresponds to Y sets of reporting resources, the Y sets of reporting resources are located in Y uplink frequency domain bandwidths, respectively, and each set of reporting resources includes one or more reporting resources. One reporting resource corresponds to Z candidate reference signals. One set of reporting resources corresponds to W sets of beam failure search spaces, and the W sets of beam failure search spaces are located in W downlink frequency domain bandwidths, respectively. Where X, Y, Z and W are each a positive integer not less than 1.

The one reporting resource corresponding to the Z candidate reference signals includes at least one of the correspondences described below. The Z candidate reference signals correspond to Z downlink frequency domain bandwidth parts. The Z candidate reference signals correspond to Z control channel resource groups. The Z candidate reference signals correspond to Z downlink component carrier groups. The Z candidate reference signals correspond to Z beam failure detection reference signal sets. In response to indication information of Z1 reference signals among the Z candidate reference signals being required to be reported, it is determined, according to at least one of the following pieces of information corresponding to the Z1 reference signals, that a signal sent in a current reporting resource corresponds to one candidate reference signal among the Z1 reference signals: frequency domain bandwidth part in an active state closest to the current reporting resource, index information of the Z1 reference signals among the Z candidate reference signals, priority information of Z1 control channel resource groups corresponding to the Z1 reference signals, priority information of Z1 downlink component carrier groups corresponding to the Z1 reference signals, index information of Z1 control channel resource groups corresponding to the Z1 reference signals, or index information of Z1 downlink component carrier groups corresponding to the Z1 reference signals, where Z1 is a positive integer greater than 1.

The preset rule includes at least one of: C sets of beam failure recovery parameters being included in one downlink frequency domain bandwidth; or D sets of beam failure recovery parameters being included in one uplink frequency domain bandwidth; where C and D are each a positive integer not less than 1, and m sets of beam failure recovery parameters correspond to at least one of: m control channel resource groups, m frequency domain bandwidth groups or m pieces of channel or signal configuration information, where m is C or D.

The method satisfies at least one of the following: a downlink frequency domain bandwidth part and an uplink frequency domain bandwidth part belonging to a special cell (SPcell); a communication node refusing to receive a beam failure recovery parameter that does not satisfy the preset rule; or the beam failure recovery process including reporting frequency domain bandwidth index information, where the reported frequency domain bandwidth part index information is configured for indicating at least one of: frequency domain bandwidth part where reported reference signal indication information is located or detection of a beam failure event according to a beam failure detection reference signal corresponding to the frequency domain bandwidth part index information.

The preset rule includes at least one of the rules described below. One downlink frequency domain bandwidth part corresponds to E beam failure recovery processes, and the E beam failure recovery processes correspond to E control channel resource groups included in the one downlink frequency domain bandwidth part, where E is a positive integer not less than 1. When a channel or signal carrying reference signal indication information conflicts with another channel or signal, the channel or signal carrying the reference signal indication information has higher priority. When a channel or signal associated with a control resource set for beam failure recovery conflicts with another channel or signal, the channel or signal associated with the control resource set for beam failure recovery has highest priority. When a channel or signal associated with a control resource set for beam failure recovery conflicts with another channel or signal, the channel or signal associated with the control resource set for beam failure recovery has priority over another channel or signal of a first type, where the another channel or signal of the first type satisfies a quasi-co-location relationship with at least one reference signal in a beam failure detection reference signal set. A spatial filtering parameter of an uplink channel or signal scheduled by a control channel in a control resource set for beam failure recovery is obtained according to a spatial sending filtering parameter for sending reference signal indication information. A granting-free channel or signal carries reference signal indication information. Reference signal indication information is carried in higher-layer signaling information.

In an embodiment, the channel or signal associated with the control resource set for beam failure recovery includes a control channel transmitted in the control resource set for beam failure recovery and a channel or signal scheduled by a control channel which is transmitted in the control resource set for beam failure recovery.

The preset rule includes at least one of the following and the control resource set for beam failure recovery included in the preset rule satisfies at least one of the features described below. Merely a dedicated control channel is monitored in a control resource set for beam failure recovery. Merely at least one of downlink control information DCI0_0 or DCI1_0 is monitored in a control resource set for beam failure recovery, and at least one of DCI0_1 or DCI1_1 is not monitored. A transmission configuration indicator (TCI) domain is not included in a control channel in the control resource set for beam failure recovery. The number of bits of a sounding reference signal (SRS) resource indication field in a control channel in a control resource set for beam failure recovery is 0, where the SRS resource indication domain is configured for indicating a spatial parameter of an uplink data channel. The number of bits of a type of bit field in a control channel in a control resource set for beam failure recovery is different from the number of bits of the type of bit domain in a control channel in another control channel resource. A reference signal sequence is monitored in a control resource set-beam failure recovery. After a predetermined reference signal sequence is received in a control resource set for beam failure recovery, at least one of the following operations is performed: successfully completing a reference signal indication information sending process or stopping a beam failure recovery timer. The number of different quasi-co-location reference signals included in a quasi-co-location reference signal set is not greater than the number of reference signals capable of being included in a beam failure detection reference signal set, where a quasi-co-location reference signal set includes a quasi-co-location reference signal of a type of quasi-co-location parameter associated with a control channel resource configured in a frequency domain bandwidth.

The beam failure recovery process satisfies the preset rule in a predetermined time period. The predetermined time period includes at least one of: a period in which a response monitoring timer operates; a period in which a beam failure recovery timer operates; a period after reference signal indication information is sent and until an update message of a quasi-co-location reference signal of a control channel is received; a period after reference signal indication information is sent and until an update message of a quasi-co-location reference signal of a control channel is received in a data channel scheduled by the control channel in a control resource set-beam failure recovery; a period after reference signal indication information is sent and until a control channel is received in a control resource set-beam failure recovery; a period after reference signal indication information is sent and until a predetermined sequence is received in a control resource set-beam failure recovery; a period after reference signal indication information is sent and until an update message of a spatial filtering parameter of an uplink channel or signal is received; a period after reference signal indication information is sent and until an update message of a spatial filtering parameter of an uplink channel or signal is received in a data channel scheduled by a control channel in a control resource set-beam failure recovery; a period from receiving a control channel or a predetermined sequence in a control resource set-beam failure recovery to receiving update information of a quasi-co-location reference signal of a downlink control channel; a period from receiving a control channel or a predetermined sequence in a control resource set-beam failure recovery to receiving an update message of a spatial filtering parameter of an uplink channel or signal.

The method further includes determining, according to a quasi-co-location reference signal of F control channel resources satisfying a predetermined feature, a reference signal included in a beam failure detection reference signal set. The F control channel resources satisfying the predetermined feature satisfy at least one of the features described below. The F control channel resources do not include a control resource set for beam failure recovery. Quasi-co-location reference signals associated with a type of quasi-co-location parameter and in different control channel resources of the F control channel resources do not satisfy a quasi-co-location relationship. The F control channel resources are dedicated control channel resources. Quasi-co-location reference signals associated with a type of quasi-co-location parameter are configured in the F control channel resources. Quasi-co-location reference signals associated with a type of quasi-co-location parameter in the F control channel resources include at least one ofF quasi-co-location reference signals with a largest density or F quasi-co-location reference signals with a largest bandwidth in a quasi-co-location reference signal set associated with the type of quasi-co-location parameter in a control channel resource set. A control channel resource whose quasi-co-location reference signal set associated with a type of quasi-co-location parameter includes synchronization signal block (SSB) in a control channel resource set are preferentially selected as the F control channel resources. Control channel resource indexes of the F control channel resources satisfy the predetermined feature in a control channel resource set. Quasi-co-location reference signals associated with a type of quasi-co-location parameter of the F control channel resources belong to a same frequency domain bandwidth, where one control channel resource includes at least one of a set formed by control channel resources configured in the frequency domain bandwidth or a set formed by control channel resources satisfying a predetermined feature; where F is a positive integer not less than 1.

Based on the preceding embodiments, the application scenarios described below are also provided in order to understand the technical solutions.

### Scenario one

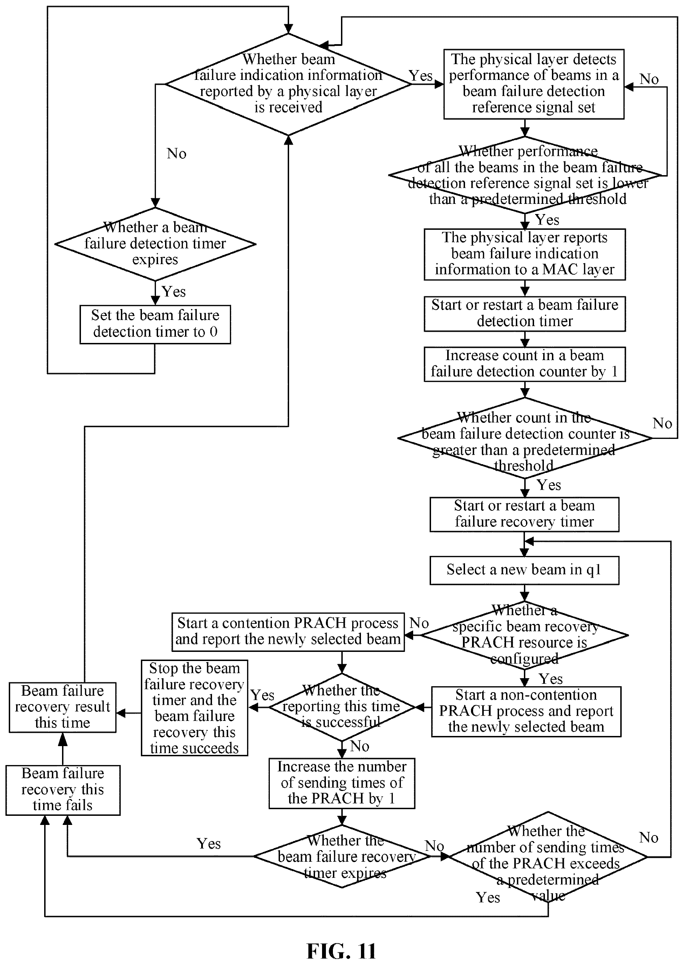

FIG. 11 is a flowchart of implementing a beam failure recovery process according to an embodiment of the present disclosure. The beam failure recovery process includes the operations described below.

Operation one: Whether a beam failure occurs is detected. A terminal detects whether the beam failure is sent by detecting a reference signal in a beam failure detection reference signal set. When the performance of all reference signals in the beam failure detection reference signal set is lower than a predetermined threshold, the physical layer of the terminal reports beam failure indication information to the MAC layer. When the performance of at least one reference signal in the beam failure detection reference signal set is higher than the predetermined threshold, it is considered that no beam failure is detected, the physical layer of the terminal does not report the beam failure indication information to the MAC layer, and the terminal continues to detect the performance of a reference signal in the beam failure detection reference signal set. After receiving the beam failure indication information from the physical layer, the MAC layer starts or restarts a beam failure detection timer, increases a beam failure counter by 1, and sets the beam failure detection counter to 0 when the beam failure detection timer expires.

Operation two: A new beam is selected. If the beam failure counter reaches a predetermined value, the MAC layer of the terminal instructs the physical layer to select reference signals whose performance is greater than the predetermined value from the reference signal set of the candidate reference signal set, and reports the resource index information of these reference signals and the RSRP of the reference signals to the MAC layer.

Operation three: The selected new beam is reported. The MAC layer selects one of multiple reference signals reported by the physical layer that satisfy the performance and reports the index of the one reference signal to a base station. Before such step, the base station allocates the association relationship between a reference signal in the candidate reference signal set and a physical random-access channel (PRACH) resource to the terminal so that the terminal can send the PRACH, that is, a preamble, on the PRACH resource corresponding to the selected reference signal. After receiving the PRACH information, the base station knows that the reference signal in the beam failure detection reference signal set has a beam failure and knows the new beam (that is, the beam corresponding to the selected reference signal resource) selected by the terminal in the candidate reference signal set. Such PRACH resource is referred to as physical random access channel-beam failure recovery (PRACH-BFR) for simplicity. Reporting reference signal indication information herein includes that the terminal sends a preamble on a reporting resource (such as a PRACH resource which may also be referred to as a PRACH-BFR resource), or the terminal reports, in a PUCCH, indication information of a reference signal selected in a candidate reference signal set.

Operation four: The confirmation information for information about the reported new beam is monitored. After the terminal reports the information about the selected new beam, a time domain monitoring window is opened, that is, a monitoring response timer is started to monitor the confirmation information sent by the base station. Thereby, the terminal knows that the base station receives the information about the selected new beam sent by the terminal. The terminal monitors a PDCCH sent by the base station in a search space-beam failure recovery (SS-BFR) included in the control resource set-beam failure recovery (CORESET for BFR). When the PDCCH sent by the base station is monitored in the SS-BFR, the PRACH process of beam failure recovery is considered successful. When the PDCCH is not detected in the SS-BFR in the time domain monitoring window, that is, during the operation of the monitoring response timer, the number of sending times of the PRACH is increased by 1. If the beam failure recovery timer does not expire and the number of sending times of the PRACH do not exceed a predetermined value, operation three can be returned to for continuation; otherwise, the current beam failure recovery process is considered to have failed. From monitoring the PDCCH in the SS-BFR to receiving the update of the quasi-co-location reference signal of a PDCCH from the base station, the terminal considers that a quasi-co-location relationship is satisfied between the reported new beam (that is, the new reference signal) and demodulation reference signals (DMRS) of a PDCCH and a physical downlink shared channel (PDSCH). After the success of the PRACH process of beam failure recovery and until an update of the quasi-co-location reference signal of the PDCCH from the base station is received, the terminal continues to monitors the PDCCH in the SS-BFR. The update of the quasi-co-location reference signal of the PDCCH includes at least one of the following updates: the update of the quasi-co-location reference signal of the PDCCH by a medium access control-control element (MAC-CE) command or the update of a quasi-co-location reference signal list of the PDCCH by radio resource control (RRC) signaling. After receiving the update of the quasi-co-location reference signal of the PDCCH from the base station, the terminal stops monitoring the PDCCH in the SS-BFR.

NR allows communication based on the frequency domain bandwidth part mechanism. In an uplink CC, at most four candidate frequency domain bandwidth parts can be configured, merely one uplink frequency domain bandwidth part can be in an active state at a time. In a downlink CC, at most four candidate frequency domain bandwidth parts can be configured, and merely one downlink frequency domain bandwidth part can be in an active state at a time.

### Scenario two

In this scenario, assuming that respective {beam failure detection reference signal sets, candidate reference signal sets, search space-beam failure recovery} exist in N downlink frequency domain bandwidth parts. When a switch is performed from one frequency domain bandwidth part among the N frequency domain bandwidth parts to another frequency domain bandwidth part, enhancement schemes for the beam failure recovery process are provided below.

Manner one for a beam failure recovery process: N downlink frequency domain bandwidth parts correspond to the same timer and counter. The timer includes a beam failure detection timer, a beam failure recovery timer and a monitoring response timer. The counter includes a beam detection failure counter and a reference signal indication information sending counter. After being switched of the downlink frequency domain bandwidth part, no operation is performed on the timer or the counter concerning the handover of the frequency domain bandwidth part, thus achieving seamless transition. The timer and the counter are not terminated or restarted concerning the handover of the frequency domain bandwidth part, and merely the f beam failure detection reference signal set, candidate reference signal set} in the process of beam failure recovery are updated and replaced.

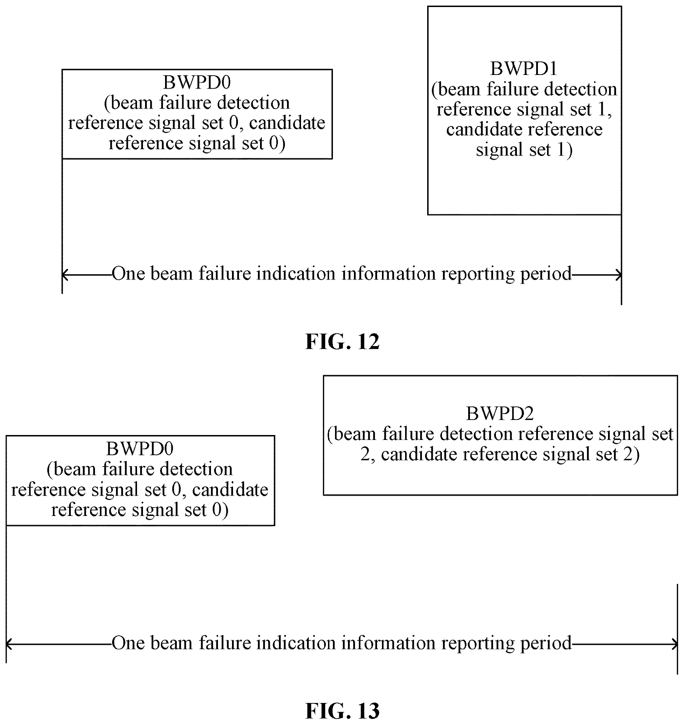

FIG. 12 is schematic diagram one of a BWP switch happened during a beam failure indication information reporting period according to an embodiment of the present disclosure. As shown in FIG. 12, a switch is performed from frequency domain bandwidth part BWPDO to frequency domain bandwidth part BWPD1, and the f beam failure detection reference signal set, candidate reference signal set} in the beam failure recovery process are updated from {beam failure detection reference signal set 0, candidate reference signal set 0} in frequency domain bandwidth part BWPDO to {beam failure detection reference signal set 1, candidate reference signal set 1} in frequency domain bandwidth part BWPD1. That is, when frequency domain bandwidth part BWPDO is in an active state, only when the performance of all reference signals in beam failure detection reference signal set 0 is lower than a predetermined threshold, the physical layer reports beam failure indication information to the MAC layer. When accumulation in the beam failure counter reaches a predetermined value, a new beam is selected from candidate reference signal set 0. After being switched from frequency domain bandwidth part BWPDO to frequency domain bandwidth part BWPD1, only when the performance of all reference signals in beam failure detection reference signal set 1 is lower than a predetermined threshold, the physical layer reports beam failure indication information to the MAC layer. When accumulation in the beam failure counter reaches a predetermined value, a new beam is selected from candidate reference signal set 1. Therefore, before being switched from frequency domain bandwidth part BWPDO to frequency domain bandwidth part BWPD1, the accumulation continues on the basis of the original beam failure counter if accumulation in the beam failure counter has reached a value such as 3 which is less than the predetermined threshold, 6, after being switched to frequency domain bandwidth part BWPD1. That is, the initial value of the beam failure counter after being switched to frequency domain bandwidth part BWPD1 is 3.

At this time, a case described below exists. The frequency domain bandwidth part switch happed during a beam failure indication information reporting period. At this time, it may be agreed that the terminal decides whether to report the beam failure indication information according to the beam failure detection reference signal set in the new frequency domain bandwidth part. Alternatively, it is agreed to decide whether to report the beam failure indication information according to the beam failure detection reference signal set in the frequency domain bandwidth part in an active state corresponding to a time length included in the beam failure indication information reporting period. As shown in FIG. 7, in a beam failure indication information reporting period, the time for frequency domain bandwidth part BWPDO to be in the active state is longer than the time for frequency domain bandwidth part BWPD1 to be in the active state.

Therefore, in this reporting period, it is decided whether to report the beam failure indication information to the MAC layer according to whether the performance of all reference signals in beam failure detection reference signal set 0 configured in frequency domain bandwidth part BWPDO is lower than a predetermined value.

FIG. 13 is schematic diagram two of a BWP switch happened during a beam failure indication information reporting period according to an embodiment of the present disclosure. As shown in FIG. 13, during a beam failure indication information reporting period, the time for frequency domain bandwidth part BWPD2 to be in the active state is longer than the time for frequency domain bandwidth part BWPDO to be in the active state. Therefore, in this reporting period, it is decided whether to report the beam failure indication information to the MAC layer according to whether the performance of all reference signals in beam failure detection reference signal set 2 configured in frequency domain bandwidth part BWPD2 is lower than a predetermined value.

In another embodiment at this time, a correspondence is established between the beam failure detection reference signal set in the new frequency domain bandwidth part and the beam failure detection reference signal set in the old frequency domain bandwidth part and a correspondence is established between the candidate reference signal set in the new frequency domain bandwidth part and the candidate reference signal set in the old frequency domain bandwidth part. For example, for reference signals (1,2) included in the beam failure detection reference signal set in the old frequency domain bandwidth part and reference signals (3,4) included in the beam failure detection reference signal set in the new frequency domain bandwidth part, a quasi-co-location (QCL) relationship is satisfied between reference signal 1 and reference signal 3, and a QCL relationship is satisfied between reference signal 2 and reference signal 4. It is considered that two reference signals having a QCL relationship correspond to the same sending beam of the base station and may be virtualized as one reference signal. Therefore, link performance obtained by synthesizing reference signals (1, 3) is referred to as first link performance, and link performance obtained by synthesizing reference signals (2, 4) is referred to as second link performance. When both the first link performance and the second link performance are lower than a predetermined link performance threshold, the physical layer sends beam failure indication information to the MAC layer. The above is to establish correspondences between the reference signals in the beam failure detection reference signal sets in one new frequency domain bandwidth part and one old frequency domain bandwidth part through QCL relationships. Of course, a correspondence between the reference signals may also be established through other rules or explicit signaling notified by the base station.

Similarly, for the detection of a candidate reference signal set, the preceding detection method of the beam failure detection reference signal set may also be adopted. For example, for a correspondence established between the reference signals in candidate reference signal sets in the new and old frequency domain bandwidth parts, for example, the candidate reference signal set in the old frequency domain bandwidth part includes reference signals (5, 6), the candidate reference signal set in the new frequency domain bandwidth part includes reference signals (7, 8), a correspondence exists between reference signal (5, 7) (for example, corresponding to the same sending beam 1), and a correspondence exists between reference signals (6, 8) (for example, corresponding to the same sending beam 2). Therefore, the terminal can obtain the performance corresponding to sending beam 1 based on reference signals (5, 7) and obtain the performance of sending beam 2 corresponding to reference signals (6, 8) based on reference signals (6, 8) and thereby selects a preferred sending beam from sending beam 1 and sending beam 2 to be sent to the base station.

The correspondence to be established between the reference signals in the new and old frequency domain bandwidth parts may be a correspondence considered to exist between two or more candidate reference signals when two or more candidate reference signals (that is, the reference signals in the candidate reference signal set) are associated with the same PRACH resource. After the terminal sends a preamble code on the one PRACH resource (sending the PRACH is sending a preamble code on the PRACH channel in this scenario), the base station knows that the terminal obtains the selection result of a new beam based on the two or more reference signals associated with the PRACH. Two or more reference signals associated with the same PRACH resource correspond to different frequency domain bandwidth parts.

In manner one of the beam failure recovery process, the beam failure process is not interrupted with the handover of the frequency domain bandwidth part. That is, the beam failure detection reference signal sets are associated and the candidate reference signal sets are associated in multiple frequency domain bandwidth parts, which corresponds to the same beam failure recovery process.

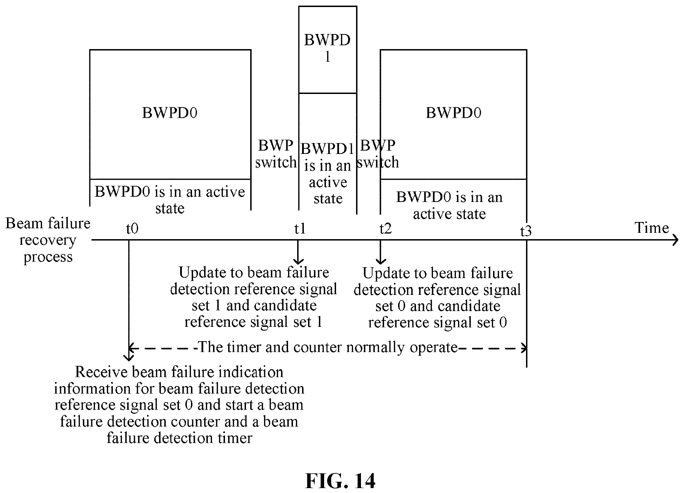

FIG. 14 is schematic diagram one of multiple frequency domain bandwidth parts corresponding to one beam failure process according to an embodiment of the present disclosure. As shown in FIG. 14, frequency domain bandwidth part BWPDO and frequency domain bandwidth part BWPD1 share one beam failure recovery process, that is, correspond to the same beam failure detection timer. For a beam failure recovery timer, a monitoring timer, a beam failure counter and a reference signal indication information sending counter, these timers and counters are not subjected to additional operations concerning the handover of the frequency domain bandwidth part. For example, these timers and counters are not set to 0/stopped/suspended/restarted or the like. After being switched of the frequency domain bandwidth part, merely the beam failure detection reference signal set and candidate reference signal set are updated to the beam failure detection reference signal set and candidate reference signal set in the frequency domain bandwidth part after being switched in the beam failure recovery process. Of course, if no beam failure detection reference signal set (or candidate reference signal set) exists in the frequency domain bandwidth part after being switched, in an embodiment, at least one of the beam failure detection reference signal set or the candidate reference signal set is not updated. For example, after being switched of the frequency domain bandwidth part and after the preamble is sent in the old frequency domain bandwidth part, the PDCCH is monitored in the SS-BFR of the new frequency domain bandwidth part so as to determine whether the base station receives the PRACH sent by the terminal. The PRACH has been sent in the old frequency domain bandwidth part. However, when the monitoring timer expires, the PDCCH has not been monitored in the SS-BFR in the old frequency domain bandwidth part, the reference signal indication information sending counter has not reached a predetermined number of times, and the base station triggers a switch of frequency domain bandwidth part in DCI in another search space (SS). At this time, the terminal can continue to send the PRACH in the new frequency domain bandwidth part.

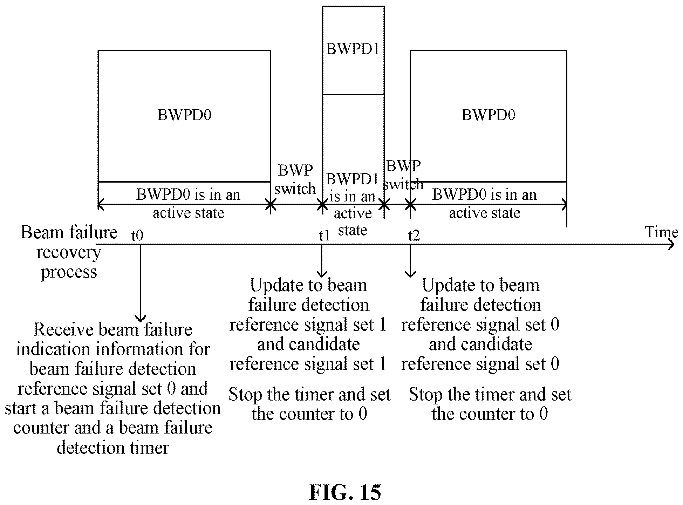

Manner two of a beam failure recovery process: FIG. 15 is schematic diagram two of multiple frequency domain bandwidth parts corresponding to one beam failure process according to an embodiment of the present disclosure. As shown in FIG. 15, after being switched of the downlink frequency domain bandwidth part, the beam failure detection timer and the beam failure recovery timer are stopped, the beam failure counter is set to 0, the reference signal indication information sending counter is set to 0, and the terminal restarts the beam failure recovery process shown in FIG. 1 in the new frequency domain bandwidth part. After the MAC layer of the terminal receives, in the new frequency domain bandwidth part, the beam failure indication information fed back by the physical layer, the flows in FIG. 1 are adopted to start the beam failure detection timer and the beam failure recovery timer and to perform accumulation in the beam failure counter. Similarly, after being switched of the frequency domain bandwidth part, a reference signal is also selected from the candidate reference signal set in the new frequency domain bandwidth part.

In manner one and manner two of the beam failure recovery process, it is to be understood that multiple downlink frequency domain bandwidth parts correspond to one set of beam failure detection timers, beam failure recovery timers, monitoring timers, beam failure counters and reference signal indication information sending counters. The difference is whether counters/timers on different frequency domain bandwidth parts are associated after being switched of the frequency domain bandwidth part. For example, the difference is whether accumulation in the beam failure counter continues in the new frequency domain bandwidth part. If the accumulation may continue, manner one is used, and otherwise manner two is used. For example, the difference is whether the PRACH sending process is to be restarted after being switched of the frequency domain bandwidth part. If restart is performed, manner two is used, and if restart is not performed, manner one is used. Configuration information of at least one of the following in different downlink frequency domain bandwidth parts is to be the same: a beam failure detection timer, a monitoring timer, a beam failure recovery timer, a beam failure counter or a reference signal indication information sending counter. Alternatively, merely one frequency domain bandwidth part among multiple downlink frequency domain bandwidth parts is configured with one set of beam failure detection timers, monitoring timers, beam failure recovery timers, beam failure counter and reference signal indication information sending counters, and the multiple downlink frequency domain bandwidth parts share such parameters. The preamble information reported by the terminal does not need to carry information about the frequency domain bandwidth part. In the implementations below, different frequency domain bandwidth parts correspond to respective beam failure recovery processes. The configuration of these parameters in each frequency domain bandwidth part does not need to meet constraints.

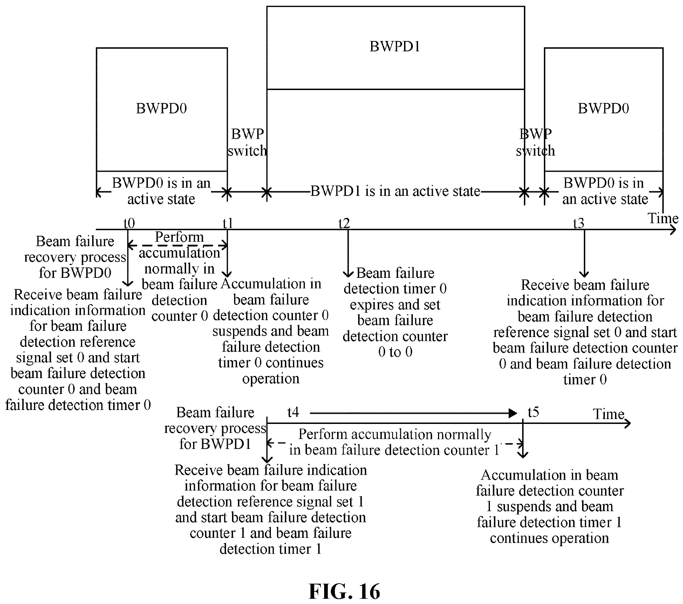

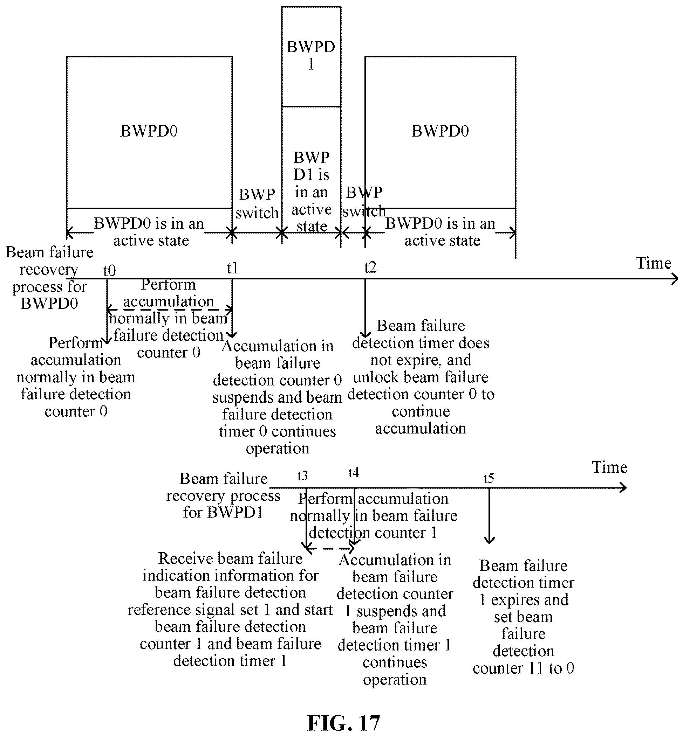

Manner three of a beam failure recovery process: FIG. 16 is schematic diagram one each of multiple downlink frequency domain bandwidth parts respectively corresponding to respective beam failure recovery processes according to an embodiment of the present disclosure. FIG. 17 is schematic diagram two of each of multiple downlink frequency domain bandwidth parts respectively corresponding to respective beam failure recovery processes according to an embodiment of the present disclosure. As shown in FIGS. 16 and 17, if two downlink frequency domain bandwidth parts exist with each corresponding to a respective one beam failure process, that is, each downlink frequency domain bandwidth part has respective {beam failure detection timer, beam failure recovery timer, monitoring timer, beam failure counter, reference signal indication information sending counter}. When a switch of frequency domain bandwidth part occurs, no operation is performed on the beam failure detection timer in the old frequency domain bandwidth part concerning the handover of the frequency domain bandwidth part, and accumulation in the beam failure counter in the old frequency domain bandwidth part suspends until a switch to the old frequency domain bandwidth part again, as shown in FIG. 17. Before being switched to the old frequency domain bandwidth part again, if the beam failure detection timer corresponding to the old frequency domain bandwidth part expires, the beam failure counter corresponding to this frequency domain bandwidth part is set to 0, as shown in FIG. 16. No operation is performed on the beam failure detection timer in the new frequency domain bandwidth part concerning the handover of the frequency domain bandwidth part. The beam failure counter in the new frequency domain bandwidth part accumulation in which was previously suspended may be started for the accumulation to continue. Of course, if the beam failure detection timer in the frequency domain bandwidth part has expired within the interval between the time when the suspended beam failure counter is in an active state twice in succession, the beam failure counter in the new frequency domain bandwidth part accumulation in which was suspended has been set to 0. If the new frequency domain bandwidth part to which a switch is currently performed is in an active state for the first time, the flows shown in FIG. 16 are started for the new frequency domain bandwidth part. Relevant operations on the beam failure detection timer, the beam failure recovery timer and the beam failure counter are performed according to the flows shown in FIG. 16 after the beam failure indication information obtained based on the beam failure detection reference signal set in the new frequency domain bandwidth part is received. In a word, it is considered that each frequency domain bandwidth part corresponds to an independent set of flows in FIG. 16. In the preceding implementations, during the time period when the new BWP (that is, the BWP after being switched, such as BWPD1 in FIGS. 16 to 17) is in the active state, in the beam failure recovery process for the old BWP (that is, the BWP before being switched, such as BWPD0 in FIGS. 16 to 17), the beam failure detection timer continues to operate, the rest of the timers (including the beam failure recovery timer and the monitoring timer) are suspended, and accumulation in the counters (including the beam failure detection counter and a reference signal indication information sending number counter) are also suspended. These timers and counters will be started after a switch to BWPD0 again. For example, in the time period from t1 to t5 (or time period from t11 to t5) in FIG. 16 and the time period from t1 to t4 (or time period from t11 to t4) in FIG. 17, 0 (that is, beam failure recovery timer 0 shown) and 0 (that is, monitoring timer 0 shown) are suspended, and accumulation in 0 (that is, beam failure detection counter 0 shown) and 0 (that is, reference signal indication information sending number counter shown) is also suspended. At time moment t6 in FIG. 16 and time moment t2 in FIG. 17, 0, 0, 0, 0] are unlocked.

Manner four of a beam failure recovery process: The new BWP and the old BWP each correspond to one beam failure recovery process. Manner four differs from manner three in that during the time period when the new BWP is in the active state, the beam failure process for the old BWP is allowed to continue. For example, in the time period from t1 to t5 (or time period from t11 to t5) in FIG. 16 and the time period from t1 to t4 (or time period from t11 to t4) in FIG. 17, 0, 0 continue to operate and/or 0, 0 also continue to operate, such as the reference signal in the new BWP corresponding to the beam failure detection reference signal in the old BWP and the reference signal in the new BWP corresponding to the candidate reference signal in the old BWP. In the new BWP, at least two beam failure recovery processes operate in parallel since it is possible that the beam failure recovery process of the BWP before the old BWP may also operate in the current new BWP. Of course, the maximum number of beam failure recovery processes operating in parallel in one BWP may also be specified. For example, the beam failure recovery process for the old BWP is referred to as process 1, and the beam failure recovery process for the new BWP is referred to as process 2. In the new BWP, at least two sets of reporting resources and two sets of search space-beam failure recovery are required for process 1 and process 2. For example, two sets of PRACH resources {PRACH-BFR1, PRACH-BFR-2} and two sets of SS-BFR {SS-BFR1, SS-BFR-2} exist for process 1 and process 2. The quasi-co-location reference signal of SS-BFRi and the quasi-co-location reference signal of the PDSCH scheduled by DCI in the SS-BFRi are reference signal indication information reported in process i, where i = 1, 2. The spatial filtering parameter of the PUSCH/PUCCH scheduled by DCI in the SS-BFRi is the spatial filtering parameter used for reporting reference signal indication information in process i, that is, the preamble used for sending a preamble in a PRACH-BFR resource. The PUCCH scheduled by DCI in the SS-BFRi includes the PUCCH where the Acknowledgement/Negative Acknowledgement (ACK/NACK) message of the PDSCH scheduled by the DCI in the SS-BFRi is located. In another implementation, merely one set of PRACH-BFR and one set of SS-BFR exist for process 2 in the new BWP, and the reference signal indication information reporting for the beam failure recovery processes of other BWPs operating in the new BWP can be carried in higher-layer signaling in the new BWP, such as MAC-CE/RRC signaling. In the third implementation, the new BWP and the old BWP each correspond to one set of {beam failure detection reference signal set, candidate reference signal set, PRACH-BFR}, and the new BWP and the old BWP correspond to merely one set of SS-BFR. The DCI of SS-BFR or the PDSCH scheduled by DCI in SS-BFR carries process index information or set index information of a candidate reference signal set.

In FIG. 16, the operation related to the beam failure recovery process at the time of a BWP switch is performed at time moment t1, and of course, may also be performed at time moment 111. Similarly, the operation performed at time moment t5 may also be performed at time moment t6. In FIG. 17, the operation related to the beam failure recovery process at the time of a BWP switch is performed at time moment t1, and of course, may also be performed at time moment 111. Similarly, the operation performed at time moment t4 may also be performed at time moment t2.

In FIGS. 16 to 17, each BWP corresponds to one independent beam failure recovery process. When a PRACH resource is associated with more than one candidate reference signal, different candidate reference signals belong to candidate reference signal sets in different BWPs. After the terminal sends a preamble in this PRACH, the terminal and the base station agree the downlink BWP in an active state closest to the current PRACH resource, and the reference signal indication information reported in the PRACH resource is for the candidate reference signal set in such downlink BWP.

In the preceding three beam failure recovery processes, the beam failure detection timer, the monitoring timer, the beam failure recovery timer, the beam failure counter and the reference signal indication information sending counter all operate according to one of the preceding three beam failure recovery processes. Of course, this scenario does not exclude that at least one of part of timers or part of counters operates according to the preceding manner i and does not exclude that at least one of part of timers or part of counters operates according to the preceding manner j. i and j are positive integers belonging to {1, 2, 3} and are not equal. For example, the beam failure detection timer and the beam failure counter operate according to manner one, while the beam failure recovery timer, the monitoring timer and the reference signal indication information sending counter operate according to manner two of association establishment.

### Scenario three

In this scenario, {beam failure detection reference signal sets, beam failure detection timers, beam failure counters} are configured in N downlink frequency domain bandwidth parts. {Candidate reference signal sets, PRACHs, associations between candidate reference signal sets and PRACHs, beam failure recovery timers, SS-BFR, monitoring timers and reference signal indication information sending counters} are configured in M uplink frequency domain bandwidth parts. The purpose is to confirm the correspondence between them. The parameter of a timer is used for configuring the duration of the timer. The parameter of a counter is used for configuring a predetermined threshold corresponding to the counter. When the count of the counter reaches the predetermined threshold corresponding to the counter, a predetermined operation is performed.

In an active CC of time division duplexing (TDD), the number of downlink frequency domain bandwidth parts should be the same as the number of uplink frequency domain bandwidth parts. However, a case still exists in which N is different from M. For example, in at least one of the cases where the beam failure recovery parameters are configured in merely part of the uplink frequency domain bandwidth parts or the beam failure recovery parameters are configured in merely part of the downlink frequency domain bandwidth parts, it is necessary to determine the correspondence between the beam failure recovery parameters in M uplink frequency domain bandwidth parts and the beam failure recovery parameters in N downlink frequency domain bandwidth parts. Therefore, it can be determined that the terminal sends a preamble in one PRACH resource because of at least one of the following: in which downlink frequency domain bandwidth parts the performance of the reference signals in the beam failure detection reference signal sets is detected to be lower than a predetermined threshold; or in which downlink frequency domain bandwidth parts are the candidate reference signal sets detected. For example, the configuration of BFR parameters in the uplink frequency domain bandwidth parts (that is, frequency domain bandwidth parts U in Table 1) and the downlink frequency domain bandwidth parts (that is, frequency domain bandwidth parts D in Table 1) is shown in Table 1. For simplicity of description in Table 1, seven parameters {candidate reference signal set, PRACH, association between a candidate reference signal set and a PRACH, beam failure recovery timer, SS-BFR, monitoring timer, reference signal indication information sending counter} configured in one uplink frequency domain bandwidth part are referred to as one set of BFR-U parameters (that is, the second-type beam failure recovery parameters). Three parameters {beam failure detection reference signal set, beam failure detection timer, beam failure counter} configured in one downlink frequency domain bandwidth part are referred to as one set of BFR-D parameters (that is, the first-type beam failure recovery parameters). In Table 1, BFR-Ui denotes the i-th BFR-U parameter set, where i = 0, 1, and BFR-Dj denotes the j-th BFR-D parameter set, where j = 0, 1, 2. Frequency domain bandwidth part Ui in Table 1 denotes the i-th frequency domain bandwidth part U, where i is equal to a value from 0 to 3, Frequency domain bandwidth part Uj in Table 1 denotes the j-th frequency domain bandwidth part D, where j is equal to a value from 0 to 3.

In a frequency division duplexing (FDD) system, one of the four candidate frequency domain bandwidth parts U in the uplink CC and each of the four candidate frequency domain bandwidth parts D in the downlink CC may be in an active state at the same time.

**Table 1**

| Frequency domain bandwidth part index | Configuration of BFR |
|---|---|
| Frequency domain bandwidth part U0 | BFR-UO |
| Frequency domain bandwidth part U1 | BFR-U1 |
| Frequency domain bandwidth part U2 | No BFR parameter configured |
| Frequency domain bandwidth part U3 | No BFR parameter configured |
| Frequency domain bandwidth part D0 | BFR-D0 |
| Frequency domain bandwidth part D1 | BFR-D1 |
| Frequency domain bandwidth part D2 | No BFR parameter configured |
| Frequency domain bandwidth part D3 | BFR-D3 |

The correspondences between N BFR-U and M BFR-D, such as the correspondences between two BFR-U parameter sets and three BFR-D parameter sets in Table 1, may be determined in one or more of the manners described below. After the correspondences are determined, if the base station receives the PRACH in one frequency domain bandwidth part U, at least one of the following can be determined through the correspondences: the frequency domain bandwidth part D in which the beam failure detection reference signal set is detected so that the terminal detects the occurrence of a beam failure event (that is, the frequency domain bandwidth part D the count of the beam failure counter corresponding to which reaches a predetermined value); or the frequency domain bandwidth part D in which the terminal detects a new beam in the candidate reference signal set. After the correspondences are determined, the terminal also knows that after detecting the occurrence of a beam failure event based on one beam failure detection reference signal set, at least one of the following operations is performed: it is required that which frequency domain bandwidth part D is used for selecting a new beam from the candidate reference signal set or it is required that which frequency domain bandwidth part U is used for reporting the new beam.

Determination manner one: A correspondence exists between the BFR-U parameter set of the uplink frequency domain bandwidth part and the BFR-D parameter of the downlink frequency domain bandwidth part having the same frequency domain bandwidth part-ID. That is, the terminal sends a preamble on the PRACH-BFR in uplink frequency domain bandwidth part U0 merely because the performance of all reference signals in the beam failure detection reference signal set in frequency domain bandwidth part D0 is lower than a predetermined value. The beam failure detection reference signal set configured in frequency domain bandwidth part D3 does not need to be detected by the terminal since when the reference signals in the beam failure detection reference signal set in BFR-D parameter set 3 are all lower than the predetermined threshold, no BRACH-BFR corresponds to such beam failure detection reference signal set, and the terminal cannot send a preamble on any PRACH-BFR. Therefore, the terminal does not need to detect the beam failure detection reference signal set in BFR-D parameter set 3. That is, at this time, it is required that once the BFR-D parameter set is configured in a downlink frequency domain bandwidth part, the BFR-U parameter set is required to be configured in an uplink frequency domain bandwidth part having the same frequency domain bandwidth part-ID as the downlink frequency domain bandwidth part. The terminal does not expect to receive the following configuration: the BFR-D parameter set is configured in a downlink frequency domain bandwidth part, and no BFR-U parameter set is configured in the uplink frequency domain bandwidth part having the same frequency domain bandwidth part-ID as the downlink frequency domain bandwidth part. That is, it is required that once the BFR-U parameter set is configured in an uplink frequency domain bandwidth part, the BFR-D parameter set is required to be configured in a downlink frequency domain bandwidth part having the same frequency domain bandwidth part-ID as the uplink frequency domain bandwidth part. The terminal does not expect to receive the following configuration: a BFR-U parameter set is configured in an uplink frequency domain bandwidth part, and no BFR-D parameter set is configured in the downlink frequency domain bandwidth part having the same frequency domain bandwidth part-ID as the uplink frequency domain bandwidth part. That is, a one-to-one correspondence exists between frequency domain bandwidth part in the frequency domain bandwidth part D set configured with BFR-D and frequency domain bandwidth part in the frequency domain bandwidth part U set configured with BFR-U.

Determination manner two: Correspondences exist between one frequency domain bandwidth part U configured with a BFR-U parameter set and all frequency domain bandwidth parts D configured with a BFR-D parameter set in a CC. If a reference signal in a beam failure detection reference signal set in any BFR-D is lower than a predetermined threshold, a preamble can be sent on a PRACH resource configured in the BFR-U parameter set. For example, frequency domain bandwidth part D3 and frequency domain bandwidth part U3 are currently in an active state. A parameter in BFR-D3 in frequency domain bandwidth part D3 is detected so that the occurrence of a beam failure event is detected, that is, the beam failure counter in BFR-D-3 reaches a predetermined threshold corresponding to the beam failure counter. At this time, since no BFR-U parameter set is configured in frequency domain bandwidth part U3, the terminal needs to be switched to frequency domain bandwidth part U configured with a BFR-U parameter set. However, since two frequency domain bandwidth parts U {frequency domain bandwidth part U0, frequency domain bandwidth part U1} are configured with a BFR-U parameter set, the terminal can select, based on frequency domain bandwidth part index information, frequency domain bandwidth part U to be switched to. For example, the terminal is switched to frequency domain bandwidth part U having a lower frequency domain bandwidth part-ID among multiple frequency domain bandwidth parts configured with the BFR-U parameter set. For example, the terminal is switched to frequency domain bandwidth part U0 in which the terminal determines which PRACH resource is used for sending a preamble according to indication information of a new reference signal selected from a candidate reference signal set. Another manner of deciding which frequency domain bandwidth part U in the set of frequency domain bandwidth parts U configured with the BFR-U parameter set the terminal needs to be switched to is that the terminal determines which frequency domain bandwidth part U to be switched to according to the indication information of the selected new reference signal. For example, the candidate reference signal set in BFR-UO in Table 1 includes reference signals (1, 2) and the candidate reference signal set in BFR-U1 includes reference signals (2, 3). The terminal may select a reference signal (that is, indication information of the new reference signal) from reference signals (1, 2, 3) and determines which frequency domain bandwidth part U to be switched to based on the selected reference signal. For example, the selected reference signal is merely available in one frequency domain bandwidth part U, and then the terminal is switched to the one frequency domain bandwidth part U. For example, reference signal 1 is selected, and then the terminal is switched to frequency domain bandwidth part U0; reference signal 3 is selected, and then the terminal is switched to frequency domain bandwidth part U1; or reference signal 2 is selected, and then the terminal may be switched to the frequency domain bandwidth part U having the lowest frequency domain bandwidth part-ID.

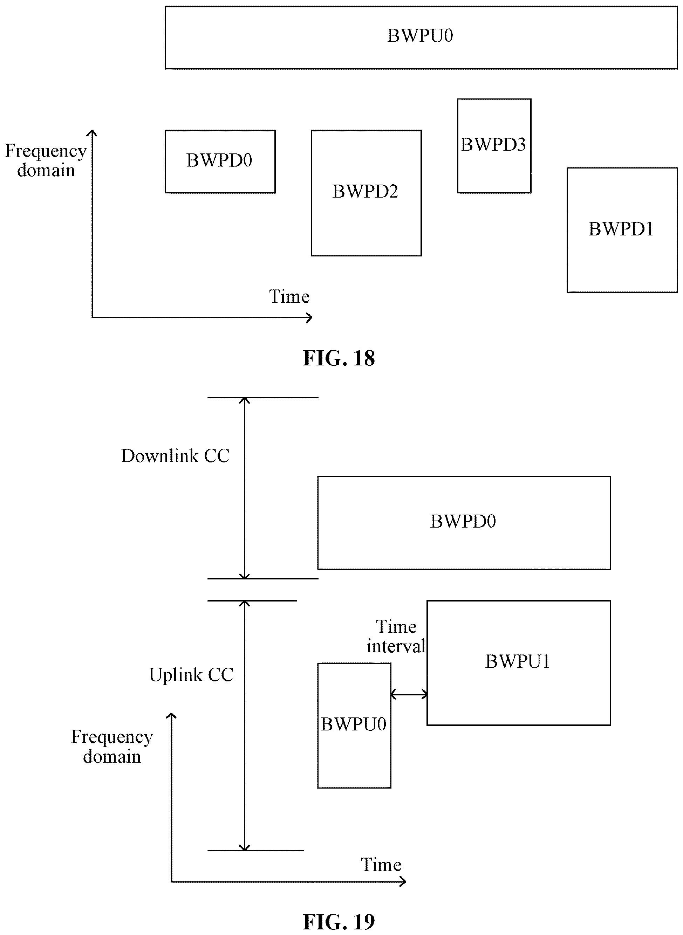

Determination manner three: a correspondence exists between frequency domain bandwidth part U and frequency domain bandwidth part D which are in the active state at the same time, or more precisely, a correspondence exists between the frequency domain bandwidth part U and the frequency domain bandwidth part D which are in the active state at the same time, and a correspondence exists between the BFR-U parameter set in the frequency domain bandwidth part U and the BFR-D parameter set in the frequency domain bandwidth part D. In FDD, independently subj ected to a switch of frequency domain bandwidth part, one downlink frequency domain bandwidth part and each of the candidate frequency domain bandwidth parts in an uplink CC may be in the active state at the same time. For example, a downlink CC includes four frequency domain bandwidth parts, an uplink CC includes three uplink frequency domain bandwidth parts, and the downlink frequency domain bandwidth parts in the active state may be different in different time periods during the period when the uplink frequency domain bandwidth part is in the active state. FIG. 18 is schematic diagram three of each of multiple downlink frequency domain bandwidth parts respectively corresponding to respective beam failure recovery processes according to an embodiment of the present disclosure. As shown in FIG. 18, as long as the terminal detects a beam failure event in the BFR-D parameter set in any frequency domain bandwidth part D of frequency domain bandwidth part D0, frequency domain bandwidth part D1, frequency domain bandwidth part D2 and the frequency domain bandwidth part D3, indication information of a new reference signal may be selected from indication information of the reference signal selected in the candidate reference signal set configured in BFR-UO, and a preamble may be sent in the corresponding PRACH resource in frequency domain bandwidth part U0 according to the indication information of the selected new reference signal. One PRACH resource in BFR-UO configured in frequency domain bandwidth part U0 needs to be associated with x candidate reference signal sets, and different candidate reference signals correspond to different frequency domain bandwidth parts D in {frequency domain bandwidth part D0, frequency domain bandwidth part D1, frequency domain bandwidth part D2, frequency domain bandwidth part D3}, where x is a positive integer less than or equal to 4. That is, x is less than or equal to the number of frequency domain bandwidth parts included in a downlink candidate frequency domain bandwidth part set included in one CC. Similarly, FIG. 19 is a schematic diagram of a downlink BWP according to an embodiment of the present disclosure. As shown in FIG. 19, the uplink BWPs in the active state may be different in different time periods during the period when one downlink BWP is in the active state.

Determination manner four: a correspondence between the BFR-D parameter set and the BFR-U parameter set in frequency domain bandwidth part U is determined according to SS-BFR information configured in frequency domain bandwidth part U. For example, if the SS-BFR search space in the BFR-U parameter set in frequency domain bandwidth part U0 is located in frequency domain bandwidth part D1, a correspondence exists between the BFR-U parameter set in frequency domain bandwidth part U0 and the BFR-D parameter set in frequency domain bandwidth part D1.

Determination manner five: a correspondence between the BFR-D parameter set and the BFR-U parameter set in frequency domain bandwidth part U is determined according to candidate reference signal set information configured in frequency domain bandwidth part U. For example, if a reference signal included in the candidate reference signal set in the BFR-U parameter set in frequency domain bandwidth part U0 is located in frequency domain bandwidth part D1, a correspondence exists between the BFR-U parameter set in frequency domain bandwidth part U0 and the BFR-D parameter set in frequency domain bandwidth part D1.

Determination manner six: determination is performed through explicit signaling. For example, correspondences between N BFR-U parameter sets and M configured BFR-D parameter sets are determined through explicit signaling, for example, the configuration information of BFR-Ui includes index information of BFR-Dj.

In the preceding embodiment, the first-type beam failure recovery parameters are a BFR-D parameter set, and the second-type beam failure recovery parameters are a BFR-U parameter set. Similarly, the method for determining the correspondences between N sets of first-type beam failure recovery parameters and M sets of second-type beam failure recovery parameters may further include the cases described below.

Case one: the first-type beam failure recovery parameters belong to the {beam failure detection reference signal set, beam failure detection timer, beam failure counter}, and the second-type beam failure recovery parameters belong to the {candidate reference signal set}. When a beam failure event is detected based on a set of parameters {beam failure detection reference signal set, beam failure detection timer, beam failure counter}, the terminal knows which {candidate reference signal set} is used as a basis for selecting a new beam.

Case two: the first-type beam failure recovery parameters belong to the {candidate reference signal set}, and the second-type beam failure recovery parameters belong to the {association between a candidate reference signal set and a PRACH, beam failure recovery timer, monitoring timer, reference signal indication information sending counter}. When a new beam is selected based on a set of parameters {candidate reference signal set}, the terminal knows which set of { association between a candidate reference signal set and a PRACH, beam failure recovery timer, monitoring timer, reference signal indication information sending counter} is used as a basis for reporting indication information of the new beam.

Case three: the first-type beam failure recovery parameters belong to the {association between a candidate reference signal set and a PRACH, beam failure recovery timer, monitoring timer, reference signal indication information sending counter}, and the second-type beam failure recovery parameters belong to {SS-BFR}. When a new beam is reported based on a set of parameters {association between a candidate reference signal set and a PRACH, beam failure recovery timer, monitoring timer, reference signal indication information sending counter}, the terminal knows which set of {SS-BFR} is used as a basis for reporting indication information of the new beam.

In this scenario, the frequency domain bandwidth part corresponding to one set of first-type beam failure recovery parameters indicates that the signal or channel determined according to the first-type beam failure recovery parameters is located in the frequency domain bandwidth part, and the frequency domain bandwidth part corresponding to one set of second-type beam failure recovery parameters indicates that the signal or channel determined according to the second-type beam failure recovery parameters is located in the frequency domain bandwidth part.

### Scenario four

A beam failure recovery configuration (Beam Failure Recovery Config) in frequency domain bandwidth part U includes: a candidate reference signal set, a PRACH, an association between a candidate reference signal set and a PRACH, a beam failure recovery timer, SS-BFR, a monitoring timer, and a reference signal indication information sending counter.

If no limitation on the SS-BFR is provided, the SS-BFR may be located in any frequency domain bandwidth part in the downlink candidate frequency domain bandwidth part set, which is not suitable in this scenario. The reason is that in a PRACH process, the terminal is not subjected to a switch of frequency domain bandwidth part or a new PRACH process is performed after being switched to the new frequency domain bandwidth part. Therefore, after sending a preamble on the PRACH, the terminal needs to monitor response information from the base station. In this process, if a switch of an uplink frequency domain bandwidth part being switched is not performed for the terminal, a switch of downlink frequency domain bandwidth part being switched cannot be performed in a TDD system. Therefore, it is necessary to limit the frequency domain bandwidth part D where the SS-BFR is located to have the same frequency domain bandwidth part-ID information as one frequency domain bandwidth part U, where the SS-BFR is configured in a beam failure recovery configuration which is configured in the one frequency domain bandwidth part U.

In the FDD system, SS-BFR configured in one uplink frequency domain bandwidth part U may not be constrained as above, so the configuration method described below may be adopted.

Configuration method one: Multiple pieces of SS-BFR are configured in one frequency domain bandwidth part U, where different pieces of SS-BFR fall in different frequency domain bandwidth parts D. One frequency domain bandwidth part U needs to include pieces of SS-BFR configured for all frequency domain bandwidth parts D in the downlink CC since the downlink frequency domain bandwidth parts D in the active state in different time periods when one frequency domain bandwidth part U is in the active state may be different, and one downlink frequency domain bandwidth part U may be in the active state at the same time as any one of the downlink candidate frequency domain bandwidth parts. After such configuration, after sending the preamble, the terminal can monitor random access response (RAR) information sent by the base station without being subjected to the downlink frequency domain bandwidth part being switched.

Configuration method two: The SS-BFR configured in one frequency domain bandwidth part U may be located in any frequency domain bandwidth part D; after the terminal sends a preamble on the PRACH-BFR resource, a switch is performed from a downlink frequency domain bandwidth part to the frequency domain bandwidth part D where the SS-BFR is located if the SS-BFR is not located in the currently active frequency domain bandwidth part D. Merely one SS-BFR is or multiple pieces of SS-BFR are configured in one frequency domain bandwidth part U. After the terminal sends a preamble on the PRACH-BFR resource, if the SS-BFR set configured in the frequency domain bandwidth part U where the PRACH-BFR is located has a SS-BFR falling in the currently active frequency domain bandwidth part D, the RAR information is monitored based on the SS-BFR corresponding to the currently active frequency domain bandwidth part D; otherwise, a switch is performed from the frequency domain bandwidth part D to the frequency domain bandwidth part D where one SS-BFR in the SS-BFR set configured in the frequency domain bandwidth part U is located, for example, to the frequency domain bandwidth part D where the SS-BFR with the lowest SS-BFRID is located.

### Scenario five

In this embodiment, in a first time period, for example, from the time when the terminal monitors the PDCCH in the SS-BFR to the time when the terminal receives an update of the quasi-co-location reference signal of the PDCCH by the base station in a predetermined channel (the predetermined channel includes at least one of the PDCCH transmitted in the SS-BFR or the PDSCH scheduled by the PDCCH in the SS-BFR), the terminal considers that a quasi-co-location relationship is satisfied between the reported new beam (that is, the new reference signal, in other words, the reference signal indicated in the reference signal indication information) and demodulation reference signals (DMRSs) of the PDCCH in the SS-BFR and the PDSCH scheduled in the SS-BFR. In the first time period, the quasi-co-location reference signals of other control channels and data channels scheduled by other control channels are still performed according to the original configurations and do not vary with the reference signal indication information.

In a first time period, before an update of the quasi-co-location reference signal for the PDCCH is received in other control channels or the data channels scheduled by other control channels and an update of the quasi-co-location reference signal for the PDCCH is not received in the SS-BFR or the data channel scheduled by the SS-BFR, the first time period does not end, and the terminal considers that a quasi-co-location relationship is satisfied between the reported new beam and DMRSs of the PDCCH in the SS-BFR and the PDSCH scheduled in the SS-BFR.

In a first time period, the SS-BFR has higher priority if the SS-BFR conflicts with other control channels; or in a first time period, the SS-BFR has higher priority if the SS-BFR conflicts with a first-type control channel, where a quasi-co-location relationship is satisfied between the first-type control channel and at least one reference signal in the beam failure detection reference signal set, for example, a quasi-co-location relationship is satisfied between the first-type control channel and at least one reference signal in the beam failure detection reference signal set with respect to a spatial receiving parameter.

In a first time period, the terminal continues to monitor the PDCCH in the SS-BFR. The update of the quasi-co-location reference signal of the PDCCH includes at least one of the following updates: the update of the quasi-co-location reference signal of the PDCCH by a MAC-CE command or the update of a list of quasi-co-location reference signals of the PDCCH by the RRC signaling. After receiving the update of the quasi-co-location reference signal of the PDCCH from the base station, the terminal stops monitoring the PDCCH in the SS-BFR.

Since the PDCCH is monitored in the SS-BFR merely during the first time period, and the quasi-co-location reference signals of the PDCCH in the SS-BFR and of the PDSCH scheduled by the PDCCH in the SS-BFR are both indicated by reference signal indication information, at least one of the agreements described below may be provided. Merely a specific PDCCH is monitored in the SS-BFR, merely DCI1_0/DCI1_1 is monitored in the PDCCH in the SS-BFR, tci-PresentInDCI in DCI1_1 in the SS-BFR is not enabled, the number of bits in the bit field of the SRS resource indicator (SRI) in DCI0_1 in the SS-BFR is 0, or the number of bits is not determined according to the number of SRS resources included in the SRS-set for codebook or the SRS-set for non codebook. The SRS resource indicator is used for indicating which SRS resource is used as a basis for acquiring the precoding/spatial sending filtering parameter of the PUSCH, and for details, reference may be made to protocol 38.212 in the 5G new air interface standard protocol.

Of course, this embodiment does not exclude the simplification of other bit fields in the DCI in the SS-BFR, such as a time domain resource indication field and a channel state information (CSI) request field. Even in the SS-BFR, merely one sequence is sent during the operation of the response timer, indicating merely that the base station receives the preamble sent by the terminal. For example, a DMRS sequence may be sent. When the DMRS sequence of the PDCCH is a first sequence, the base station merely sends this sequence and does not send the PDCCH. When the DMRS sequence of the PDCCH is a second sequence, the base station sends not only the DMRS but also the PDCCH. Therefore, when receiving the preamble, the base station merely gives a response to the terminal and does not schedule the PDSCH/PUSCH/PUCCH. According to this rule during the operation of the beam failure recovery timer, the terminal receives the reference signal sequence, indicating that the signal to interference plus noise ratio (SINR) obtained according to the reference signal sequence (also referred to as a reference signal port) and the control channel BLER obtained according to the transmission parameter assumption of the control channel have prediction values lower than a predetermined threshold. When the terminal receives a predetermined reference signal sequence or PDCCH in the SS-BFR, the preamble is successfully sent, and the beam failure recovery timer is stopped.

Of course, the first time period may also be one of the following time periods: a period in which a response monitoring timer operates, a period in which a beam failure recovery timer operates, a period after reference signal indication information is sent and until an update message of a quasi-co-location reference signal of a control channel is received, or a period after reference signal indication information is sent and until a control channel is received in a beam failure recovery control channel.

A conflict of multiple downlink channels or signals includes at least one of the cases described below.

Case one: The intersection between resources occupied by multiple channels or signals is not an empty set, and the resources include at least one of: a time domain resource, a frequency domain resource, a code domain resource, a spatial domain resource or an antenna port, where one spatial domain resource corresponds to one quasi-co-location reference signal.

Case two: The spatial domain resources occupied by multiple channels or signals cannot be simultaneously generated by the terminal or the difference set of spatial domain resources occupied by multiple channels or signals is not an empty set. For example, the terminal can merely generate one receive beam at a time, and when the multiple channels or signals do not satisfy a quasi-co-location relationship, the multiple channels or signals conflict. For example, the terminal can merely generate two receive beams at a time. When the quasi-co-location reference signals of the multiple channels or signals do not satisfy a quasi-co-location relationship and are more than two, the multiple channels or signals conflict.

Case three: The conflict of multiple control channel resources also includes that the sum of the numbers of candidate control channels included in multiple control channel resources exceed the number of candidate control channels that can be blindly detected by a first communication node in a time unit.

When multiple channels or signals conflict, merely the channel or signal having high priority is received, or the multiple channels or signals are received with the parameter of the channel or signal having high priority.

### Scenario six

In this embodiment, in a second time period, a channel or signal carrying reference signal indication information has higher priority when the channel or signal carrying the reference signal indication information conflicts with other channels or signals, for example, the preamble in the PRACH-BFR conflicts with the uplink channel or signal scheduled by other control channels, or the preamble conflicts with a periodic PUCCH that has been configured before.

In the second time period, the spatial filtering parameter of the uplink channel or signal scheduled by the control channel in a control resource set for beam failure recovery is acquired according to the spatial filtering parameter for sending the reference signal indication information. The beam failure control channel resource represents the SS-BFR or the control-resource set (CORESET) where the SS-BFR is located. The uplink channel includes at least one of the PUCCH or the PUSCH, and the uplink signal includes an SRS, a PRACH and a scheduling request (SR). For example, in the second time period, the SRS-set (for at least one of non codebook or codebook) corresponding to the PUSCH is updated to be a set including merely a preamble for sending the reference signal indication information.

The second time period includes at least one of the following time periods: a period in which a response monitoring timer operates; a period in which a beam failure recovery timer operates; a period after reference signal indication information is sent and before an update message of a spatial filtering parameter of an uplink channel or signal is received; a period after reference signal indication information is sent and before an update message of a spatial filtering parameter of an uplink channel or signal is received in a data channel of a control channel in a control resource set-beam failure recovery; or a period after reference signal indication information is sent and until a control channel is received in a beam failure recovery control channel.

A conflict between multiple uplink channels or signals includes at least one of the cases described below.

Case one: The intersection between resources occupied by multiple channels or signals is not an empty set, and the resources include at least one of: a time domain resource, a frequency domain resource, a code domain resource, a spatial domain resource, an antenna port or an antenna resource. One spatial resource is associated with one reference signal of the spatial sending filtering parameter.

Case two: The spatial sending filtering parameters occupied by multiple channels or signals cannot be generated simultaneously by the terminal. For example, the reference signals associated with the spatial filtering parameters of multiple channels or signals cannot be sent simultaneously by the terminal. For example, the reference signals of multiple spatial sending filtering parameters belong to one SRS set.

When multiple channels or signals conflict, merely the channel or signal having high priority is sent, or the multiple channels or signals are sent with the parameter of the channel or signal having high priority.

### Scenario seven

In this embodiment, a beam failure detection reference signal set *q*₀ is acquired in an implicit manner such as through a quasi-co-location reference signal associated with a spatial receiving filtering parameter configured in a CORESET. One BWP or one CC is configured with H CORESETs. Each CORESET may be configured with a quasi-co-location reference signal of the PDCCH transmitted by the each CORESET, and the set *q*₀ includes at most F reference signals. For how to select F CORESETs from the H CORESETs to obtain the reference signals included in the set *q*₀, one or more of the rules described below may be used for selecting the F CORESETs.

Rule one: The F control channel resources do not include a control resource set-beam failure recovery.

Rule two: Quasi-co-location reference signals associated with a type of quasi-co-location parameter and in different control channel resources of the F control channel resources do not satisfy a quasi-co-location relationship. That is, the quasi-co-location reference signals associated with the type of quasi-co-location parameter in the F control channel resources do not satisfy the quasi-co-location relationship. For example, if quasi-co-location reference signals associated with a type of quasi-co-location parameter and in two control channel resources of H control channel resources satisfy a quasi-co-location relationship, the two control channel resources are regarded as one control channel resource, and merely one of the two control channel resources needs to be selected.

Rule three: The F control channel resources are specific control channel resources, that is, a common control channel resource is not included in the F control channel resources.

Rule four: The F control channel resources are the latest configured control channel resources among the H control channel resources.

Rule five: Quasi-co-location reference signals associated with a type of quasi-co-location parameter in the F control channel resources are at least one of F quasi-co-location reference signals with a largest density or F quasi-co-location reference signals with a largest bandwidth in a set formed by quasi-co-location reference signals associated with the type of quasi-co-location parameter in the H control channel resources.

Rule six: Synchronization signal and PBCH block (SS/PBCH block, SSB) control channel resources included in the set of quasi-co-location reference signals associated with a type of quasi-co-location parameter and among the H control channel resources are preferentially selected as the F control channel resources.

Rule seven: Quasi-co-location reference signals associated with a type of quasi-co-location parameter are configured in the F control channel resources.

Rule eight: The control channel resource indexes of the F control channel resources satisfy a predetermined feature in a control channel resource set. For example, the F control channel resources are the control channel resources corresponding to the lowest F control channel resource indexes in a control channel resource set (of course, may also be the control channel resources corresponding to the highest F control channel resource indexes in a control channel resource set, or may also be control channel resources satisfying other predetermined features in a control channel resource set). A control channel resource set is a set formed by control channel resources configured in one BWP or one CC or is a set formed by control channel resources satisfying a predetermined feature among the control channel resources configured in one BWP or one CC, such as a set formed by control channel resources satisfying any one or more of rules one to seven described above.

The control channel resource is a CORESET. Of course, if the quasi-co-location reference signal can be configured at the level of a search space /each search space set, the control channel resource may also be a search space or a search space set.

In this scenario, the type of quasi-co-location parameter includes a spatial receiving parameter.

A frequency domain bandwidth herein is the frequency domain bandwidth corresponding to one frequency domain bandwidth part or one component carrier.

### Scenario eight

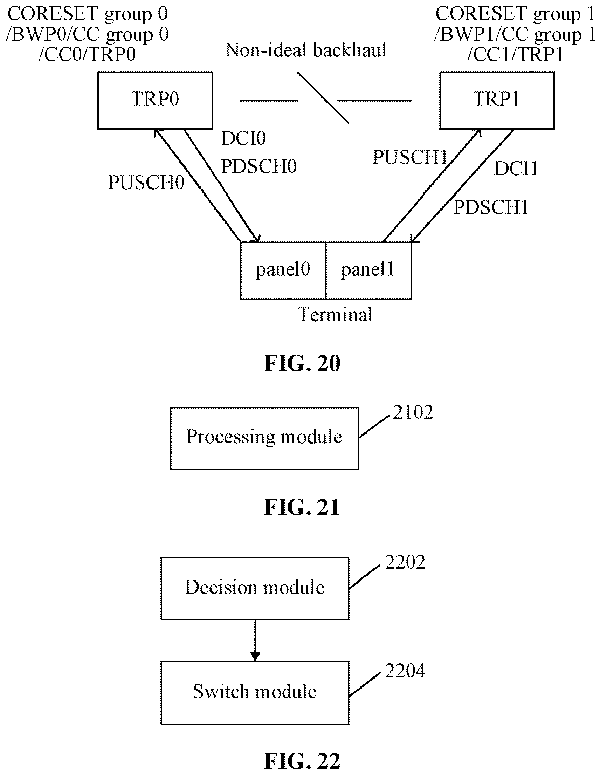

FIG. 20 is a schematic diagram of an interaction between transmission reception points (TRPs) according to an embodiment of the present disclosure.

As shown in FIG. 20, two TRPs serve one terminal, and of course it is also possible that more than two TRPs serve the terminal. In particular, no ideal backhaul exists between these two TRPs, so the communication from the two TRPs to the user equipment (UE) is relatively independent. For example, TRP1 sends DCI1 to schedule PDSCH1/PUSCH1, TRP2 sends DCI2 to schedule PDSCH2/PUSCH2, and the delay needs to be considered for information interaction between the two TRPs.

Therefore, CORESET group i/search space (SS) group i/CC group i may correspond to TRPi, where i = 0, 1. When the terminal detects that a beam failure event occurs based on reference signal(s) in the beam failure detection reference signal set corresponding to a TRP, the terminal should inform the base station (including at least one of TRP1 or TRP2), instead of waiting until neither of the PDCCHs of the two TRPs can reach the terminal, then the terminal considers that the beam failure event occurs.

As shown in FIG. 20, each TRP corresponds to a set of beam failure recovery parameters. That is, for example, each CORESET group/search space (SS) group/CC group/CC/BWP/TRP corresponds to a set of beam failure recovery parameters. The beam failure recovery parameters include at least one of the following parameters: a beam failure detection reference signal set (that is, beam failure detection reference signal set i, where i = 0, 1), a candidate reference signal set (that is, candidate reference signal set i, where i = 0, 1), a beam failure detection counter (that is, beam failure detection counter i, where i = 0, 1), a reference signal indication information transmiting number counter (that is, reference signal indication information transmiting number counter i, where i = 0, 1), a beam failure detection timer (that is, beam failure detection timer i, where i = 0, 1), a beam failure recovery timer (that is, beam failure recovery timer i, where I = 0, 1), a monitoring timer (that is, monitoring timer i, where i = 0, 1), a reference signal indication information reporting resource (that is, PRACH-BFRi, where i = 0, 1) or a control resource set for beam failure recovery (that is, SS-BFRi, where i = 0, 1).

FIG. 20 shows that each CORESET group/search space (SS) group/CC group/TRP corresponds to an independent set of beam failure recovery parameters, that is, corresponding to an independent beam failure recovery process. In a second implementation of this scenario, part of the beam failure recovery parameters of each CORESET group/search space (SS) group/CC group/TRP are independent, and part of the failure recovery parameters are shared. For example, two beam failure detection reference signal sets (such as beam failure detection reference signal set i, i = 0, 1) and two candidate reference signal sets (such as candidate reference signal set i, i = 0, 1) are provided; as long as a beam failure event is detected in any beam failure detection reference signal set, a new reference signal is selected from the candidate reference signal set corresponding to the any beam failure detection reference signal set, and each reference signal in the two candidate reference signal sets has a corresponding PRACH resource in the PRACH-BFR. Further, it may be limited that merely one reference indication information selected from a candidate reference signal set can be reported in a time unit. The beam failure recovery parameters independently corresponding to the two TRPs include a beam failure detection reference signal set and a candidate reference signal set. Of course, this embodiment does not exclude that the beam failure recovery parameters independently corresponding to the two TRPs include other beam failure recovery parameters. Index information of a candidate reference signal set needs to be indicated in the DCI of the SS-BFR (or in the PDSCH scheduled by the DCI in the SS-BFR) so as to indicate which candidate reference signal set (candidate reference signal set 0 or candidate reference signal set 1) is received by the base station and thus the PDCCH in the SS-BFR is sent, or different candidate reference signal sets {candidate reference signal set 0, candidate reference signal set 1} correspond to different time periods/different radio network temporary identities (RNTIs) scrambling sequences/different demodulation reference signal sequences of the PDCCH in the SS-BFR.

In a third implementation of this scenario, the two TRPs each correspond to one of two beam failure detection reference signal sets (such as beam failure detection reference signal set i, i = 0, 1) and one of two candidate reference signal sets (such as candidate reference signal set i, i = 0, 1). PRACH-BFR is merely associated with reference signals in one candidate reference signal set such as candidate reference signal set 0. When the terminal discovers the occurrence of a beam failure event by detecting reference signal(s) in beam failure detection reference signal set 1, the terminal can inform TRP0 of at least one of the following pieces of information through the SR/MAC-CE command sent to TRP0: occurrence of a beam failure event in beam failure detection reference signal set 1 corresponding to TRP1 or indication information of a reference signal selected by the terminal from candidate reference signal set 1, and TRP0 forwards the above information to TRP1.

### Scenario nine

In this embodiment, in addition to the beam failure recovery process for a SPcell, a beam failure process for a secondary cell (Scell) is also provided, and thereby the beam operation situation of the Scell is detected. In view of this, schemes described below may be provided.

Scheme one: The Pcell/SPcell and Scell each correspond to an independent set of beam failure recovery parameters and each correspond to one beam failure recovery process in FIG. 11.

Scheme two: The Pcell/SPcell and Scell each correspond to part of a set of beam failure recovery parameters and share the other beam failure recovery parameters. For example, the Pcell/SPcell corresponds to {beam failure detection reference signal set 0, candidate reference signal set 0}, and the Scell corresponds to {beam failure detection reference signal set 1, candidate reference signal set 1}. When a beam failure event is detected through reference signal(s) in a beam failure detection reference signal set, a reference signal is selected from the candidate reference signal set corresponding to the beam failure detection reference signal set. At least one of the PRACH-BFR or the SS-BFR is merely in the Pcell/SPcell. For example, each reference signal in the two candidate reference signal sets {candidate reference signal set 0, candidate reference signal set 1} has at least one associated PRACH resource in the PRACH-BFR in the Pcell/SPcell, so that the configuration information of the candidate reference signal associated with the PRACH-BFR resource needs to carry CC information.

Scheme three: The Pcell/SPcell corresponds to the same beam failure recovery process, and a reference signal in the Pcell may be included in the beam failure detection reference signal set.

In this embodiment, the frequency domain bandwidth includes at least one of frequency domain bandwidth part or a component carrier (CC). That is, one frequency domain bandwidth includes at least one of one frequency domain bandwidth part or a frequency domain bandwidth corresponding to one component carrier, and the frequency domain bandwidth index includes at least one of frequency domain bandwidth part (BWP) index or a CC index.

### Embodiment four

This embodiment further provides an apparatus for processing beam failure recovery. The apparatus is configured to implement the preceding embodiments and preferred implementations. What has been described will not be repeated. As used below, the term "module" may be software, hardware, or a combination thereof capable of implementing predetermined functions. The apparatus in this embodiment described below is preferably implemented by software, but an implementation by hardware or by a combination of software and hardware is also possible and conceivable.

FIG. 21 is a block diagram illustrating a structure of an apparatus for processing beam failure recovery according to an embodiment of the present disclosure. As shown in FIG. 21, the apparatus includes a processing module 2102.

The processing module 2102 is configured to: in response to frequency domain bandwidth part being switched, perform a predetermined operation on a beam failure recovery process.

### Embodiment five

This embodiment further provides an apparatus for processing beam failure recovery. The apparatus is configured to implement the preceding embodiments and preferred implementations.

What has been described will not be repeated. As used below, the term "module" may be software, hardware, or a combination thereof capable of implementing predetermined functions. The apparatus in this embodiment described below is preferably implemented by software, but an implementation by hardware or by a combination of software and hardware is also possible and conceivable.

FIG. 22 is a block diagram illustrating a structure of another apparatus for processing beam failure recovery according to an embodiment of the present disclosure. As shown in FIG. 22, the apparatus includes a decision module 2202 and a switch module 2204.

The decision module 2202 is configured to decide whether an association exists between a switch of frequency domain bandwidth part and a beam failure recovery process.

The handover module 2204 is configured to perform, according to a decision result, at least one of the beam failure recovery process or the handover of the frequency domain bandwidth part.

It is to be noted that the various modules described above may be implemented by software or hardware. An implementation by hardware may, but may not necessarily, be performed in the following manners: the various modules described above are located in the same processor, or the various modules described above are located in their respective processors in any combination form.

### Embodiment six

This embodiment further provides an apparatus for processing beam failure recovery. The apparatus is configured to implement the preceding embodiments and preferred implementations. What has been described will not be repeated. As used below, the term "module" may be software, hardware, or a combination thereof capable of implementing predetermined functions. The apparatus in this embodiment described below is preferably implemented by software, but an implementation by hardware or by a combination of software and hardware is also possible and conceivable.

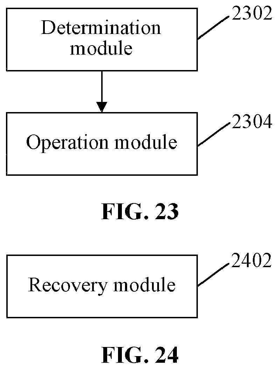

FIG. 23 is a block diagram illustrating a structure of another apparatus for processing beam failure recovery according to an embodiment of the present disclosure. As shown in FIG. 23, the apparatus includes a determination module 2302 and an operation module 2304.

The determination module 2302 is configured to determine a beam failure recovery parameter correspondence between N sets of first-type beam failure recovery parameters and M sets of second-type beam failure recovery parameters.

The operation module 2304 is configured to perform, according to the beam failure recovery parameter correspondence, at least one of: a beam failure recovery process or a switch of frequency domain bandwidth part. N and M are each a positive integer.

It is to be noted that the various modules described above may be implemented by software or hardware. An implementation by hardware may, but may not necessarily, be performed in the following manners: the various modules described above are located in the same processor, or the various modules described above are located in their respective processors in any combination form.

### Embodiment seven

This embodiment further provides an apparatus for processing beam failure recovery. The apparatus is configured to implement the preceding embodiments and preferred implementations. What has been described will not be repeated. As used below, the term "module" may be software, hardware, or a combination thereof capable of implementing predetermined functions. The apparatus in this embodiment described below is preferably implemented by software, but an implementation by hardware or by a combination of software and hardware is also possible and conceivable.

FIG. 24 is a block diagram illustrating a structure of another apparatus for processing beam failure recovery according to an embodiment of the present disclosure. As shown in FIG. 24, the apparatus includes a recovery module 2402.

The recovery module 2402 is configured to: perform a beam failure recovery process according to at least one of a beam failure recovery parameter or a preset rule, where the beam failure recovery parameter satisfies the preset rule.

It is to be noted that the various modules described above may be implemented by software or hardware. An implementation by hardware may, but may not necessarily, be performed in the following manners: the various modules described above are located in the same processor, or the various modules described above are located in their respective processors in any combination form.

### Embodiment eight

The embodiments of the present disclosure further provide a storage medium. The storage medium stores a computer program. When the computer program is executed, the steps in any one of preceding method embodiments are performed.

In this embodiment, the storage medium may be configured to store the computer program for performing the step described below.

In S 1, in response to frequency domain bandwidth part being switched, a predetermined operation is performed on a beam failure recovery process.

In this embodiment, the storage medium may be configured to store the computer program for performing the steps described below.

In S 1, it is decided whether an association exists between a switch of frequency domain bandwidth part and a beam failure recovery process.

In S2, at least one of the beam failure recovery process or the handover of the frequency domain bandwidth part is performed according to a decision result.

In this embodiment, the storage medium may be configured to store the computer program for performing the steps described below.

In S 1, a beam failure recovery parameter correspondence between N sets of first-type beam failure recovery parameters and M sets of second-type beam failure recovery parameters is determined.

In S2, at least one of a beam failure recovery process or a switch of frequency domain bandwidth part is performed according to the beam failure recovery parameter correspondence, where N and M are each a positive integer.

The storage medium is further configured to store the computer program for performing the step described below.

In S 1, a beam failure recovery process is performed by a communication node according to at least one of a beam failure recovery parameter or a preset rule, where the beam failure recovery parameter satisfies the preset rule.

In this embodiment, the storage medium may include, but is not limited to, a USB flash disk, a read-only memory (ROM), a random access memory (RAM), a mobile hard disk, a magnetic disk, an optical disk or another medium capable of storing the computer program.

The embodiments of the present disclosure further provide an electronic apparatus which includes a memory and a processor. The memory stores a computer program, and the processor is configured to execute the computer program to perform the steps in any one of the preceding method embodiments.

The electronic apparatus may further include a transmission device and an input/output device. Both the transmission device and the input/output device are connected to the processor.

In this embodiment, the storage medium may be configured to store the computer program for performing the step described below.

In S 1, in response to frequency domain bandwidth part being switched, a predetermined operation is performed on a beam failure recovery process.

In this embodiment, the storage medium may be configured to store the computer program for performing the steps described below.

In S 1, it is decided whether an association exists between a switch of frequency domain bandwidth part and a beam failure recovery process.

In S2, at least one of the beam failure recovery process or the handover of the frequency domain bandwidth part is performed according to a decision result.

In this embodiment, the storage medium may be configured to store the computer program for performing the steps described below.

In S 1, a beam failure recovery parameter correspondence between N sets of first-type beam failure recovery parameters and M sets of second-type beam failure recovery parameters is determined.

In S2, at least one of a beam failure recovery process or a switch of frequency domain bandwidth part is performed according to the beam failure recovery parameter correspondence, where N and M are each a positive integer.

The storage medium is further configured to store the computer program for performing the step described below.

In S 1, a beam failure recovery process is performed by a communication node according to at least one of a beam failure recovery parameter or a preset rule, where the beam failure recovery parameter satisfies the preset rule.

For examples in the embodiment, reference may be made to the examples described in the preceding embodiments and optional implementations, and the examples will not be repeated in the embodiment.

Apparently, it is to be understood by those skilled in the art that each of the preceding modules or steps of the present disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this manner, the present disclosure is not limited to any specific combination of hardware and software.

According to the present disclosure, at least one of a beam failure recovery process or a switch of frequency domain bandwidth part, an association between the beam failure recovery process or the handover of the frequency domain bandwidth part and a preset rule are used for performing corresponding operations, so that the problem that beam failure recovery is difficult in cases where a bandwidth part handover exists and multiple transmission nodes serve one terminal is solved and thus the effect of effectively improving beam failure recovery can be achieved.

The following items are preferred embodiments:
1. A method for processing beam failure recovery, comprising: in response to frequency domain bandwidth part being switched, performing a predetermined operation on a beam failure recovery process.
2. The method of item 1, wherein in response to the frequency domain bandwidth part being switched, the performing the predetermined operation on the beam failure recovery process comprises:
   in response to the frequency domain bandwidth part being switched, performing a first-type predetermined operation on the beam failure recovery process, wherein the first-type predetermined operation comprises at least one of:
   updating a beam failure detection reference signal set so as to use a beam failure detection reference signal set in frequency domain bandwidth part after being switched;
   updating a candidate reference signal set so as to use a candidate reference signal set in frequency domain bandwidth part after being switched;
   an initial value of a timer in frequency domain bandwidth part after being switched being a state value of a timer in the frequency domain bandwidth part before being switched;
   an initial value of a counter in frequency domain bandwidth part after being switched being a state value of a counter in the frequency domain bandwidth part before being switched;
   determining a first correspondence between a first-type reference signal and a second-type reference signal, wherein the first-type reference signal belongs to a beam failure detection reference signal set in the frequency domain bandwidth part before being switched, and the second-type reference signal belongs to a beam failure detection reference signal set in frequency domain bandwidth part after being switched; or
   determining a second correspondence between a third-type reference signal and a fourth-type reference signal, wherein the third-type reference signal belongs to a candidate reference signal set in the frequency domain bandwidth part before being switched, and the fourth-type reference signal belongs to a candidate reference signal set in frequency domain bandwidth part after being switched.
3. The method of item 1, wherein in response to the frequency domain bandwidth part being switched, the performing the predetermined operation on the beam failure recovery process comprises:
   in response to the frequency domain bandwidth part being switched, performing a second-type predetermined operation on the beam failure recovery process, wherein the second-type predetermined operation comprises at least one of:
   updating a beam failure detection reference signal set so as to use a beam failure detection reference signal set in frequency domain bandwidth part after being switched;
   updating a candidate reference signal set so as to use a candidate reference signal set in frequency domain bandwidth part after being switched;
   stopping a timer;
   or setting a counter to 0.
4. The method of item 1, 2 or 3, wherein the switched frequency domain bandwidth part satisfies at least one of:
   the frequency domain bandwidth part before being switched and the frequency domain bandwidth part after being switched corresponding to a same beam failure recovery process;
   the frequency domain bandwidth part before being switched and the frequency domain bandwidth part after being switched corresponding to a same timer;
   the frequency domain bandwidth part before being switched and the frequency domain bandwidth part after being switched corresponding to a same counter;
   no correspondence existing between frequency domain bandwidth part index information and reference signal indication information in the beam failure recovery process; or
   an association existing between a beam failure recovery parameter in the frequency domain bandwidth part before being switched and a beam failure recovery parameter in the frequency domain bandwidth part after being switched.
5. The method of item 4, wherein the association existing between the beam failure recovery parameter in the frequency domain bandwidth part before being switched and the beam failure recovery parameter in the frequency domain bandwidth part after being switched comprises at least one of:
   a configuration parameter of the timer in the frequency domain bandwidth part before being switched being same as a configuration parameter of the timer in the frequency domain bandwidth part after being switched;
   a configuration parameter of the counter in the frequency domain bandwidth part before being switched being same as a configuration parameter of the counter in the frequency domain bandwidth part after being switched; or
   the frequency domain bandwidth part before being switched and the frequency domain bandwidth part after being switched sharing configuration information of one set of beam failure recovery parameters.
6. The method of item 1, wherein in response to the frequency domain bandwidth part being switched, the performing the predetermined operation on the beam failure recovery process comprises:
   in response to the frequency domain bandwidth part being switched, performing a third-type predetermined operation on the beam failure recovery process, wherein the third-type predetermined operation comprises at least one of:
   starting or restarting a beam failure recovery process corresponding to frequency domain bandwidth part after being switched;
   unlocking a suspended beam failure recovery process corresponding to frequency domain bandwidth part after being switched;
   suspending a beam failure recovery process corresponding to the frequency domain bandwidth part before being switched;
   suspending accumulation in a counter corresponding to the frequency domain bandwidth part before being switched;
   unlocking a counter corresponding to frequency domain bandwidth part after being switched and accumulation in which is suspended;
   in response to a counter corresponding to frequency domain bandwidth part after being switched being not started, starting the counter corresponding to the frequency domain bandwidth part after being switched;
   a timer corresponding to the frequency domain bandwidth part before being switched continuing to operate in a corresponding time period in response to frequency domain bandwidth part after being switched being in an active state;
   suspending a timer corresponding to the frequency domain bandwidth part before being switched; unlocking a suspended timer corresponding to frequency domain bandwidth part after being switched;
   in response to a timer corresponding to frequency domain bandwidth part after being switched being not started, starting the timer corresponding to the frequency domain bandwidth part after being switched;
   suspending an operation of reporting reference signal indication information, wherein a reference signal corresponding to the reference signal indication information belongs to a candidate reference signal set corresponding to the frequency domain bandwidth part before being switched; unlocking a suspended operation of reporting reference signal indication information, wherein a reference signal corresponding to the reference signal indication information belongs to a candidate reference signal set corresponding to frequency domain bandwidth part after being switched;
   suspending an operation of monitoring a control channel in a beam failure search space, wherein the control channel comprises confirmation information that reference signal indication information corresponding to the frequency domain bandwidth part before being switched is successfully reported;
   unlocking a suspended operation of monitoring a control channel in a beam failure search space, wherein the control channel comprises confirmation information that reference signal indication information corresponding to frequency domain bandwidth part after being switched is successfully reported;
   updating a beam failure detection reference signal set so as to use a beam failure detection reference signal set corresponding to frequency domain bandwidth part after being switched; or updating a candidate reference signal set so as to use a candidate reference signal set corresponding to frequency domain bandwidth part after being switched.
7. The method of item 1, wherein in response to the frequency domain bandwidth part being switched, the performing the predetermined operation on the beam failure recovery process comprises:
   in response to the frequency domain bandwidth part being switched, performing a fourth-type predetermined operation on the beam failure recovery process, wherein the fourth-type predetermined operation comprises at least one of:
   starting or restarting a beam failure recovery process corresponding to frequency domain bandwidth part after being switched;
   a beam failure recovery process corresponding to the frequency domain bandwidth part before being switched continuing to operate in frequency domain bandwidth part after being switched;
   accumulation in a counter corresponding to the frequency domain bandwidth part before being switched continuing in frequency domain bandwidth part after being switched;
   in response to a counter corresponding to frequency domain bandwidth part after being switched being not started, starting the counter corresponding to the frequency domain bandwidth part after being switched;
   a timer corresponding to the frequency domain bandwidth part before being switched continuing to operate in a corresponding time period in response to frequency domain bandwidth part after being switched being in an active state;
   reporting, in frequency domain bandwidth part after being switched, reference signal indication information corresponding to the frequency domain bandwidth part before being switched;
   monitoring a control channel in a beam failure search space in frequency domain bandwidth part after being switched, wherein the control channel comprises confirmation information that reference signal indication information corresponding to the frequency domain bandwidth part before being switched is successfully reported; or
   monitoring a control channel in frequency domain bandwidth part after being switched, wherein the control channel comprises confirmation information that reference signal indication information corresponding to the frequency domain bandwidth part before being switched is successfully reported, wherein y control resource set-beam failure recoveries are comprised in the frequency domain bandwidth part after being switched, the y control resource set-beam failure recoveries correspond to y frequency domain bandwidth parts, and y is a positive integer not less than 1.
8. The method of item 7, wherein the y control resource set-beam failure recoveries corresponding to y frequency domain bandwidth parts satisfies at least one of the following conditions:
   a quasi-co-location reference signal of each of the y control resource set-beam failure recoveries is determined according to reference signal indication information corresponding to frequency domain bandwidth part corresponding to the each of the y control resource set-beam failure recoveries;
   a quasi-co-location reference signal of a downlink data channel scheduled by each of the y control resource set-beam failure recoveries is determined according to reference signal indication information corresponding to frequency domain bandwidth part corresponding to the each of the y control resource set-beam failure recoveries; or
   a spatial filtering parameter of an uplink channel or signal scheduled by each of the y control resource set-beam failure recoveries is determined according to a spatial filtering parameter for sending reference signal indication information corresponding to frequency domain bandwidth part corresponding to the each of the y control resource set-beam failure recoveries.
9. The method of item 7 or 8, wherein the reporting, in the frequency domain bandwidth part after being switched, the reference signal indication information corresponding to the frequency domain bandwidth part before being switched comprises:
   transmitting, in higher-layer signaling, the reference signal indication information corresponding to the frequency domain bandwidth part before being switched;
   wherein Z sets of physical layer reporting resources are at least comprised in the frequency domain bandwidth part after being switched, the Z sets of physical layer reporting resources correspond to Z frequency domain bandwidth parts, reference signal indication information corresponding to frequency domain bandwidth part is reported in a reporting resource corresponding to the frequency domain bandwidth part, and the Z sets of physical layer reporting resources comprise at least one of: a physical random access channel (PRACH) resource, a physical uplink control channel (PUCCH) resource or a physical uplink shared channel (PUSCH) resource;
   wherein at least one reporting resource in a physical layer reporting resource set in the frequency domain bandwidth part after being switched corresponds to a reference signal in a candidate reference signal set corresponding to the frequency domain bandwidth part before being switched; and
   reporting the reference signal indication information and frequency domain bandwidth part index information, wherein the frequency domain bandwidth part index information is configured for indicating at least one of: frequency domain bandwidth part where the reported reference signal indication information is located or detection of a beam failure event according to a beam failure detection reference signal corresponding to frequency domain bandwidth part where the frequency domain bandwidth part index information is located.
10. The method of any one of items 1 and 6 to 9, further comprising at least one of:
   each of the frequency domain bandwidth part before being switched and the frequency domain bandwidth part after being switched corresponding to one beam failure recovery process;
   each of the frequency domain bandwidth part before being switched and the frequency domain bandwidth part after being switched corresponding to one timer;
   each of the frequency domain bandwidth part before being switched and the frequency domain bandwidth part after being switched corresponding to one counter;
   a correspondence existing between frequency domain bandwidth part index information and reference signal indication information in the beam failure recovery process; or
   each of the frequency domain bandwidth part before being switched and the frequency domain bandwidth part after being switched corresponding to information about one set of beam failure recovery parameters.
11. The method of any one of items 1 to 9, wherein the frequency domain bandwidth part being switched comprises at least one of:
   downlink frequency domain bandwidth part being switched;
   an uplink frequency domain bandwidth part being switched; or
   frequency domain bandwidth part in a component carrier (CC) being switched.
12. The method of any one of items 2 to 10, wherein
   the timer comprises at least one of: a beam failure detection timer, a beam failure recovery timer or a response monitoring timer; and
   the counter comprises at least one of: a beam failure detection counter or a reference signal indication information sending counter.
13. The method of item 12, wherein a count value of the beam failure detection counter comprises:
   a sum of a beam failure detection count obtained according to the beam failure detection reference signal set in the frequency domain bandwidth part before being switched and a beam failure detection count obtained according to the beam failure detection reference signal set in the frequency domain bandwidth part after being switched.
14. The method of any one of items 1 to 10, further comprising: determining a type of the predetermined operation according to signaling information, wherein the predetermined operation is applied to a switch between any two frequency domain bandwidth parts, or the predetermined operation is applied to a switch between two specified frequency domain bandwidth parts.
15. The method of any one of items 2 to 13, further comprising determining whether a type of the predetermined operation is the first-type predetermined operation in at least one of the following manners:
   deciding whether the first correspondence is satisfied between the first-type reference signal and the second-type reference signal, and determining the type of the predetermined operation according to a decision result, wherein the first-type reference signal belongs to a first beam failure detection reference signal set in the frequency domain bandwidth part before being switched, and the second-type reference signal belongs to a second beam failure detection reference signal set in the frequency domain bandwidth part after being switched; or
   deciding whether the second correspondence is satisfied between the third-type reference signal and the fourth-type reference signal, and determining the type of the predetermined operation according to a decision result, wherein the third-type reference signal belongs to a first candidate reference signal set in the frequency domain bandwidth part before being switched, and the fourth-type reference signal belongs to a second candidate reference signal set in the frequency domain bandwidth part after being switched.
16. The method of item 15, wherein
   in response to a correspondence existing between a reference signal in a first reference signal set and a reference signal in a second reference signal set, adopting the first-type predetermined operation; and
   in response to each reference signal in the first reference signal set having a correspondence with at least one reference signal in the second reference signal set, adopting the first-type predetermined operation;
   wherein the first reference signal set is the first beam failure detection reference signal set, the second reference signal set is the second beam failure detection reference signal set, and the correspondence is the first correspondence; and/or the first reference signal set is the first candidate reference signal set, the second reference signal set is the second candidate reference signal set, and the correspondence is the second correspondence.
17. The method of item 2, 15 or 16, wherein at least one of the following is satisfied between two reference signals having a reference signal correspondence:
   link performance of a link is determined according to the two reference signals having the reference signal correspondence;
   the two reference signals having the reference signal correspondence satisfy a quasi-co-location relationship with respect to one or more quasi-co-location parameters; or
   the two reference signals having the reference signal correspondence are associated with a same reporting resource;
   wherein the reference signal correspondence comprises at least one of: the first correspondence or the second correspondence; and the two reference signals having the reference signal correspondence comprise at least one of: the first-type reference signal and the second-type reference signal having the first correspondence or the third-type reference signal and the fourth-type reference signal having the second correspondence.
18. A method for processing beam failure recovery, comprising:
   determining a beam failure recovery parameter correspondence between N sets of first-type beam failure recovery parameters and M sets of second-type beam failure recovery parameters; and
   performing, according to the beam failure recovery parameter correspondence, at least one of: a beam failure recovery process or a switch of frequency domain bandwidth part;
   wherein each of the N and M is a positive integer.
19. The method of item 18, wherein the determining the beam failure recovery parameter correspondence between the N sets of first-type beam failure recovery parameters and the M sets of second-type beam failure recovery parameters comprises at least one of:
   determining the beam failure recovery parameter correspondence according to information about the frequency domain bandwidth part;
   determining the beam failure recovery parameter correspondence according to information about a control channel resource group;
   determining the beam failure recovery parameter correspondence according to information about a component carrier (CC) or information about a CC group;
   determining a beam parameter correspondence according to configuration information of a data channel;
   determining the beam failure recovery parameter correspondence according to an index of one set of first-type beam failure recovery parameters among the N sets of first-type beam failure recovery parameters and an index of one set of second-type beam failure recovery parameters among the M sets of second-type beam failure recovery parameters;
   the beam failure recovery parameter correspondence existing between one set of second-type beam failure recovery parameters among the M sets of second-type beam failure recovery parameters and each set of first-type beam failure recovery parameters among the N sets of first-type beam failure recovery parameters;
   the beam failure recovery parameter correspondence existing between one set of first-type beam failure recovery parameters among the N sets of first-type beam failure recovery parameters and each set of second-type beam failure recovery parameters among the M sets of second-type beam failure recovery parameters;
   determining, according to signaling information, a set of second-type beam failure recovery parameters corresponding to each set of first-type beam failure recovery parameters among the N sets of first-type beam failure recovery parameters; or
   an intersection between a parameter type set comprised in the first-type beam failure recovery parameters and a parameter type set comprised in the second-type beam failure recovery parameters is an empty set.
20. The method of item 19, wherein the determining the beam failure recovery parameter correspondence according to the information about the frequency domain bandwidth part comprises at least one of:
   in response to frequency domain bandwidth part corresponding to one set of first-type beam failure recovery parameters and frequency domain bandwidth part corresponding to one set of second-type beam failure recovery parameters having a same bandwidth part index, determining that the beam failure recovery parameter correspondence exists between the one set of first-type beam failure recovery parameters and the one set of second-type beam failure recovery parameters; or
   in response to an intersection between a corresponding time resource in a case where frequency domain bandwidth part corresponding to one set of first-type beam failure recovery parameters is in an active state and a corresponding time resource in a case where frequency domain bandwidth part corresponding to one set of second-type beam failure recovery parameters is in an active state being not an empty set, determining that the beam failure recovery parameter correspondence exists between the one set of first-type beam failure recovery parameters and the one set of second-type beam failure recovery parameters.
21. The method of item 19, wherein the determining, according to the signaling information, the set of second-type beam failure recovery parameters corresponding to the each set of first-type beam failure recovery parameters comprises at least one of:
   notifying, in the signaling information, that the beam failure recovery parameter correspondence exists between one set of first-type beam failure recovery parameters among the N sets of first-type beam failure recovery parameters and one or more sets of second-type beam failure recovery parameters among the M sets of second-type beam failure recovery parameters; or
   notifying, in the signaling information, that one reporting resource corresponds to Q candidate reference signals and that the Q candidate reference signals correspond to Q sets of first-type beam failure recovery parameters.
22. The method of item 18, wherein the performing, according to the beam failure recovery parameter correspondence, at least one of: the beam failure recovery process or the frequency domain bandwidth part being switched comprises:
   performing the beam failure recovery process according to one set of first-type beam failure recovery parameters, and in response to a predetermined event occurring in the beam failure recovery process, performing a fifth-type predetermined operation in the beam failure recovery process according to one or more sets of second-type beam failure recovery parameters having the beam failure recovery parameter correspondence with the one set of first-type beam failure recovery parameters.
23. The method of item 18 or 22, wherein performing, according to the beam failure recovery parameter correspondence, at least one of: the beam failure recovery process or the frequency domain bandwidth part being switched comprises:
   in a case where a beam failure event is detected according to one set of first-type beam failure recovery parameters and frequency domain bandwidth part corresponding to one set of second-type beam failure recovery parameters having the beam failure recovery parameter correspondence with the one set of first-type beam failure recovery parameters is in an inactive state, switching a current frequency domain bandwidth part to the frequency domain bandwidth part corresponding to the one set of second-type beam failure recovery parameter having the beam failure recovery parameter correspondence with the one set of first-type beam failure recovery parameters.
24. The method of item 22 or 23, wherein
   the first-type beam failure recovery parameters comprise at least one of: a beam failure detection signal set, a maximum duration corresponding to a beam failure detection timer or a predetermined threshold corresponding to a beam failure detection counter;
   the second-type beam failure recovery parameters comprise at least one of: a candidate reference signal set, a reporting resource correspondence between a candidate reference signal set and a reporting resource, a beam failure search space, a predetermined threshold corresponding to a reference signal indication information sending counter, a maximum duration corresponding to a beam failure recovery timer or a maximum duration corresponding to a monitoring timer;
   the predetermined event in the beam failure recovery process is that the beam failure event is detected; and
   the fifth-type predetermined operation comprises at least one of: selecting a reference signal from the candidate reference signal set, reporting reference signal indication information in the reporting resource, monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.
25. The method of item 22 or 23, wherein
   the first-type beam failure recovery parameters comprise a candidate reference signal set;
   the second-type beam failure recovery parameters comprise at least one of: a reporting resource correspondence between the candidate reference signal set and a reporting resource, a reporting resource, a beam failure search space, a predetermined threshold corresponding to a reference signal indication information sending counter, a maximum duration corresponding to a beam failure recovery timer or a maximum duration corresponding to a monitoring timer;
   the predetermined event comprises that a reference signal is selected in the candidate reference signal set; and
   the fifth-type predetermined operation comprises at least one of: reporting reference signal indication information in the reporting resource, monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.
26. The method of item 22 or 23, wherein
   the first-type beam failure recovery parameters comprise a reporting resource correspondence between a candidate reference signal set and a reporting resource;
   the second-type beam failure recovery parameters comprise a beam failure search space;
   the predetermined event comprises that reference signal indication information is reported in a reporting resource obtained according to one set of first-type beam failure recovery parameters; and
   the fifth-type predetermined operation comprises at least one of: monitoring a control channel in the beam failure search space, determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.
27. The method of item 22 or 23, wherein
   the first-type beam failure recovery parameters comprise a beam failure search space;
   the second-type beam failure recovery parameters comprise at least one of: information about a predetermined channel or information about a predetermined signal;
   the predetermined event comprises monitoring a control channel in the beam failure search space; and
   the fifth-type predetermined operation comprises at least one of: determining quasi-co-location reference signal information of a predetermined channel according to reported reference signal indication information or determining a spatial transmitting filtering parameter of a predetermined channel or signal according to a spatial sending filtering parameter adopted when reference signal indication information is reported.
28. The method of item 22 or 23, wherein the switching the current frequency domain bandwidth part to the frequency domain bandwidth part corresponding to the one set of second-type beam failure recovery parameter having the beam failure recovery parameter correspondence with the one set of first-type beam failure recovery parameters comprises:
   in response to more than one frequency domain bandwidth part corresponding to the one set of second-type beam failure recovery parameters having the beam failure recovery parameter correspondence with the one set of first-type beam failure recovery parameters existing, switching the current frequency domain bandwidth part to frequency domain bandwidth part whose frequency domain bandwidth part index satisfies a specified feature among the more than one frequency domain bandwidth part; or
   in response to more than one set of second-type beam failure recovery parameters having the beam failure recovery parameter correspondence with the one set of first-type beam failure recovery parameters existing, switching the current frequency domain bandwidth part to frequency domain bandwidth part corresponding to one set of second-type beam failure recovery parameters having the beam failure recovery parameter correspondence with the one set of first-type beam failure recovery parameters and having an index satisfying a specified feature.
29. The method of any one of items 18 to 28, wherein the N sets of first-type beam failure recovery parameters and the M sets of second-type beam failure recovery parameters satisfy at least one of the following conditions:
   the N sets of first-type beam failure recovery parameters and the M sets of second-type beam failure recovery parameters are beam failure recovery parameters for one or more CCs;
   the N sets of first-type beam failure recovery parameters and the M sets of second-type beam failure recovery parameters are parameters for one or more beam failure recovery processes;
   the N sets of first-type beam failure recovery parameters correspond to N control channel resource groups;
   the M sets of second-type beam failure recovery parameters correspond to M control channel resource groups;
   the N sets of first-type beam failure recovery parameters correspond to N frequency domain bandwidth parts;
   the M sets of second-type beam failure recovery parameters correspond to M frequency domain bandwidth parts;
   the N sets of first-type beam failure recovery parameters correspond to N CCs;
   the M sets of second-type beam failure recovery parameters correspond to M CCs;
   the N sets of first-type beam failure recovery parameters correspond to N CC groups;
   the M sets of second-type beam failure recovery parameters correspond to M CC groups;
   the N sets of first-type beam failure recovery parameters correspond to N pieces of data channel configuration information; or
   the M sets of second-type beam failure recovery parameters correspond to M pieces of data channel configuration information.
30. The method of item 29, wherein the method satisfies at least one of the following conditions:
   the N control channel resource groups belong to one frequency domain bandwidth part;
   the M control channel resource groups belong to one frequency domain bandwidth part;
   the N frequency domain bandwidth parts belong to one CC, wherein N is not greater than a number of candidate frequency domain bandwidth parts comprised in the one CC and in a same transmission direction as the N frequency domain bandwidth parts;
   the M frequency domain bandwidth parts belong to a same CC, wherein M is not greater than a number of candidate frequency domain bandwidth parts comprised in the same CC and in a same transmission direction as the M frequency domain bandwidth parts;
   the N control channel resource groups and the M control channel resource groups belong to one frequency domain bandwidth part; or
   the N frequency domain bandwidth parts and the M frequency domain bandwidth parts belong to one CC;
   the N frequency domain bandwidth parts comprise at least one of: an initial bandwidth part or a default bandwidth part;
   the M frequency domain bandwidth parts comprise at least one of: an initial bandwidth part or a default bandwidth part.
31. The method of any one of items 18 to 30, wherein the first-type beam failure recovery parameters satisfy at least one of the following conditions:
   the first-type beam failure recovery parameters are configured in configuration information of one uplink frequency domain bandwidth part; or
   resources corresponding to the first-type beam failure recovery parameters are located in one uplink frequency domain bandwidth part.
32. The method of any one of items 18 to 31, wherein the second-type beam failure recovery parameters satisfy at least one of the following conditions:
   the second-type beam failure recovery parameters are configured in configuration information of one downlink frequency domain bandwidth part; or
   resources corresponding to the second-type beam failure recovery parameters are located in one downlink frequency domain bandwidth part.
33. The method of any one of items 18 to 30, wherein the method satisfies at least one of the following conditions:
   in a case where N = 1, the beam failure recovery parameter correspondence exists between the one set of first-type beam failure recovery parameters and the M sets of second-type beam failure recovery parameters;
   in a case where M = 1, the beam failure recovery parameter correspondence exists between the one set of second-type beam failure recovery parameters and the N sets of first-type beam failure recovery parameters;
   a beam failure recovery parameter correspondence exists between one set of second-type beam failure recovery parameters and A sets of first-type beam failure recovery parameters, wherein A is a positive integer not less than 1 and not greater than N;
   a beam failure recovery parameter correspondence exists between one set of first-type beam failure recovery parameters and B sets of second-type beam failure recovery parameters, wherein B is a positive integer not less than 1 and not greater than M;
   in response to a number A of sets of first-type beam failure recovery parameters having the beam failure recovery parameter correspondence with one set of second-type beam failure recovery parameters being greater than 1, set index information of the A sets of first-type beam failure recovery parameters is reported in a reporting source obtained according to the one set of second-type beam failure recovery parameters; or
   in response to a number A of sets of first-type beam failure recovery parameters having the beam failure recovery parameter correspondence with one set of second-type beam failure recovery parameters being greater than 1, reference signal indication information or set index information of the A sets of first-type beam failure recovery parameters are comprised in a channel associated with a control resource set for beam failure recovery obtained according to the one set of second-type beam failure recovery parameters.
34. The method of item 33, wherein the set index information of the first-type beam failure recovery parameters is indicated by at least one of:
   index information of a frequency domain bandwidth corresponding to the first-type beam failure recovery parameters;
   information about a control channel resource group corresponding to the first-type beam failure recovery parameters;
   index information of a CC corresponding to the first-type beam failure recovery parameters;
   index information of a CC group corresponding to the first-type beam failure recovery parameters; or
   index information of data channel configuration information corresponding to the first-type beam failure recovery parameters.
35. The method of item 33, wherein reporting the set index information of the A sets of first-type beam failure recovery parameters is for indicating at least one of the following pieces of information:
   the beam failure event being detected according to a beam failure detection reference signal set corresponding to the first-type beam failure recovery parameters corresponding to the set index information; or
   reported reference signal indication information being reference signal indication information corresponding to the set index information.
36. The method of item 33, wherein
   after receiving the reference signal indication information or the set index information of the A sets of first-type beam failure recovery parameters in the channel associated with the control resource set-beam failure recovery, a successful completion of an operation of reporting reference signal indication information corresponding to the set index information or the reference signal indication information is determined.
37. The method of item 33, wherein a correspondence exists between the set index information of the A sets of first-type beam failure recovery parameters and I sets of at least one of the following pieces of information of the channel associated with the control resource set for beam failure recovery obtained according to the one set of second-type beam failure recovery parameters:
   demodulation reference signal port information of the control channel;
   demodulation reference signal sequence information of the control channel;
   a time resource for monitoring the control channel;
   a scrambling sequence of the control channel;
   a format of control information carried in the control channel;
   demodulation reference signal information of a data channel; or
   scrambling sequence information of a data channel;
   wherein I is a positive integer less than or equal to A, the control channel is a control channel in the control resource set for beam failure recovery, and the data channel is a data channel scheduled by the control channel in the control resource set-beam failure recovery.
38. A method for processing beam failure recovery, comprising:
   performing a beam failure recovery process according to at least one of a beam failure recovery parameter or a preset rule, wherein the beam failure recovery parameter satisfies the preset rule.
39. The method of item 38, wherein the preset rule comprises at least one of:
   a beam failure detection reference signal set and a candidate reference signal set being located in a same downlink frequency domain bandwidth part;
   an uplink frequency domain bandwidth part where a reporting resource is located having same bandwidth part index information as a downlink frequency domain bandwidth part where a beam failure search space is located;
   an intersection between a time resource for an uplink frequency domain bandwidth part in an active state where a reporting resource is located and a time resource for a downlink frequency domain bandwidth part in an active state where a beam failure search space is located being not an empty set;
   a beam failure detection reference signal set, a candidate reference signal set and a beam failure search space being located in a same downlink frequency domain bandwidth part; configuration information of an association between a reporting resource and a candidate reference signal comprising index information of a frequency domain bandwidth where the candidate reference signal is located;
   configuration information of a beam failure detection reference signal comprising an index of a frequency domain bandwidth where the beam failure detection reference signal is located;
   at least two reporting resources existing in a set formed by reporting resources comprised in one frequency domain bandwidth, wherein candidate reference signals associated with two reporting resources have different frequency domain bandwidth indexes;
   y1 sets of control resource set-beam failure recovery being comprised in one frequency domain bandwidth, and the y1 sets of control resource set for beam failure recovery corresponding to y2 sets of third-type beam failure recovery parameters, wherein the third-type beam failure recovery parameters comprise at least one of: a beam detection reference signal set, a candidate reference signal set or a reporting resource set, wherein y1 and y2 are positive integers; or
   one reference signal resource being associated with more than one downlink frequency domain bandwidth part, and the one reference signal resource occupying a resource in the more than one downlink frequency domain bandwidth part, wherein the one reference signal resource corresponds to one reference signal resource identifier (ID), and the one reference signal resource comprises at least one of: a beam failure detection reference signal resource or a candidate reference signal resource.
40. The method of item 38, wherein the preset rule comprises at least one of:
   a downlink initial frequency domain bandwidth part or a downlink default bandwidth part comprising at least one of: a beam failure detection reference signal set, a candidate reference signal set or a beam failure search space;
   an uplink initial frequency domain bandwidth part or an uplink default bandwidth part comprising a reporting resource;
   reference signals in a beam failure detection reference signal set being located in a same downlink frequency domain bandwidth;
   at least two reference signals existing in a candidate reference signal set, and two reference signals being located in two different frequency domain bandwidths;
   at least one downlink frequency domain bandwidth part comprising at least one of: a beam failure detection reference signal set, a candidate reference signal set or a beam failure search space; each downlink frequency domain bandwidth part located in one component carrier (CC) comprising at least one of: a beam failure detection reference signal set, a candidate reference signal set, a beam failure search space, a beam failure detection timer ; or
   each uplink frequency domain bandwidth part located in one CC comprising at least one of: a reporting resource, a correspondence between a reporting resource and a candidate reference signal set, a beam failure recovery timer or a beam failure monitoring timer.
41. The method of item 38, wherein the preset rule comprises at least one of:
   one beam failure detection reference signal set corresponding to X candidate reference signal sets, and the X candidate reference signal sets being located in X downlink frequency domain bandwidths, respectively;
   one candidate reference signal set corresponding to Y sets of reporting resources, the Y sets of reporting resources being located in Y uplink frequency domain bandwidths, respectively, and each of the Y sets of reporting resources comprising one or more reporting resources;
   one reporting resource corresponding to Z candidate reference signals; or
   one set of reporting resources corresponding to W sets of beam failure search spaces, and the W sets of beam failure search spaces being located in W downlink frequency domain bandwidths;
   wherein each of X, Y, Z and W is a positive integer not less than 1.
42. The method of item 41, wherein the one reporting resource corresponding to the Z candidate reference signals comprises at least one of:
   the Z candidate reference signals corresponding to Z downlink frequency domain bandwidth parts;
   the Z candidate reference signals corresponding to Z control channel resource groups;
   the Z candidate reference signals corresponding to Z downlink component carrier groups;
   the Z candidate reference signals corresponding to Z beam failure detection reference signal sets; or
   in response to indication information of Z1 reference signals among the Z candidate reference signals being required to be reported, determining, according to at least one of the following pieces of information corresponding to the Z1 candidate reference signals, that a signal sent in a current reporting resource corresponds to one candidate reference signal among the Z1 candidate reference signals:
      a frequency domain bandwidth part in an active state closest to the current reporting resource, index information of the Z1 candidate reference signals among the Z candidate reference signals, priority information of Z1 control channel resource groups corresponding to the Z1 candidate reference signals, priority information of Z1 downlink component carrier groups corresponding to the Z1 candidate reference signals, index information of Z1 control channel resource groups corresponding to the Z1 candidate reference signals, or index information of Z1 downlink component carrier groups corresponding to the Z1 candidate reference signals, wherein Z1 is a positive integer greater than 1.
43. The method of item 38, wherein the preset rule comprises at least one of:
   C sets of beam failure recovery parameters being comprised in one downlink frequency domain bandwidth; or
   D sets of beam failure recovery parameters being comprised in one uplink frequency domain bandwidth;
   wherein C and D are each a positive integer not less than 1, and m sets of beam failure recovery parameters correspond to at least one of: m control channel resource groups, m frequency domain bandwidth groups or m pieces of channel or signal configuration information, wherein m is C or D.
44. The method of any one of items 38 to 43, wherein the method satisfies at least one of:
   a downlink frequency domain bandwidth part and an uplink frequency domain bandwidth part belonging to a special cell (SPcell);
   a communication node refusing to receive a beam failure recovery parameter that does not satisfy the preset rule; or
   the beam failure recovery process comprising reporting frequency domain bandwidth index information, wherein the reported frequency domain bandwidth part index information is configured for indicating at least one of: frequency domain bandwidth part where reported reference signal indication information is located or detection of a beam failure event according to a beam failure detection reference signal corresponding to the frequency domain bandwidth part index information.
45. The method of item 38, wherein the preset rule comprises at least one of:
   one downlink frequency domain bandwidth part corresponding to E beam failure recovery processes, and the E beam failure recovery processes corresponding to E control channel resource groups comprised in the one downlink frequency domain bandwidth part, wherein E is a positive integer not less than 1;
   when a channel or signal carrying reference signal indication information conflicts with another channel or signal, the channel or signal carrying the reference signal indication information having higher priority;
   when a channel or signal associated with a control resource set for beam failure recovery conflicts with another channel or signal, the channel or signal associated with the control resource set-beam failure recovery having highest priority;
   when a channel or signal associated with a control resource set for beam failure recovery conflicts with another channel or signal, the channel or signal associated with the control resource set-beam failure recovery having priority over another channel or signal of a first type, wherein the another channel or signal of the first type satisfies a quasi-co-location relationship with at least one reference signal in a beam failure detection reference signal set;
   a spatial filtering parameter of an uplink channel or signal scheduled by a control channel in a control resource set for beam failure recovery being obtained according to a spatial sending filtering parameter for sending reference signal indication information;
   a granting-free channel or signal carrying reference signal indication information; or reference signal indication information being carried in higher-layer signaling information.
46. The method of item 38, wherein the preset rule comprises at least one of:
   monitoring merely a dedicated control channel in a control resource set-beam failure recovery;
   monitoring merely at least one of downlink control information DCI0_0 or DCI1_0 in a control resource set-beam failure recovery, and not monitoring at least one of DCI0_1 or DCI1_1;
   a transmission configuration indicator (TCI) domain being not comprised in a control channel in a control resource set-beam failure recovery;
   a number of bits of a sounding reference signal (SRS) resource indication domain in a control channel in a control resource set for beam failure recovery being 0, wherein the SRS resource indication domain is configured for indicating a spatial parameter of an uplink data channel;
   a number of bits of a type of bit domain in a control channel in a control resource set-beam failure recovery being different from a number of bits of the type of bit domain in a control channel in another control channel resource;
   monitoring a reference signal sequence in a control resource set-beam failure recovery;
   after a predetermined reference signal sequence is received in a control resource set-beam failure recovery, performing at least one of the following operations: successfully completing a reference signal indication information sending process or stopping a beam failure recovery timer; or
   a number of different quasi-co-location reference signals comprised in a quasi-co-location reference signal set being not greater than a number of reference signals capable of being comprised in a beam failure detection reference signal set, wherein a quasi-co-location reference signal set comprises a quasi-co-location reference signal of a type of quasi-co-location parameter associated with a control channel resource configured in a frequency domain bandwidth.
47. The method of item 38, wherein the beam failure recovery process satisfies the preset rule in a predetermined time period, wherein the predetermined time period comprises at least one of:
   a period in which a response monitoring timer operates;
   a period in which a beam failure recovery timer operates;
   a period after reference signal indication information is sent and until an update message of a quasi-co-location reference signal of a control channel is received;
   a period after reference signal indication information is sent and until an update message of a quasi-co-location reference signal of a control channel is received in a data channel scheduled by the control channel in a control resource set-beam failure recovery;
   a period after reference signal indication information is sent and until a control channel is received in a control resource set-beam failure recovery;
   a period after reference signal indication information is sent and until a predetermined sequence is received in a control resource set-beam failure recovery;
   a period after reference signal indication information is sent and until an update message of a spatial filtering parameter of an uplink channel or signal is received;
   a period after reference signal indication information is sent and until an update message of a spatial filtering parameter of an uplink channel or signal is received in a data channel scheduled by a control channel in a control resource set-beam failure recovery;
   a period from receiving a control channel or a predetermined sequence in a control resource set-beam failure recovery to receiving update information of a quasi-co-location reference signal of a downlink control channel; or
   a period from receiving a control channel or a predetermined sequence in a control resource set-beam failure recovery to receiving an update message of a spatial filtering parameter of an uplink channel or signal.
48. The method of item 38, further comprising:
   determining, according to a quasi-co-location reference signal of F control channel resources satisfying a predetermined feature, a reference signal comprised in a beam failure detection reference signal set, wherein the F control channel resources satisfying the predetermined feature satisfy at least one of:
   the F control channel resources not comprising a control resource set-beam failure recovery;
   quasi-co-location reference signals associated with a type of quasi-co-location parameter and in different control channel resources of the F control channel resources not satisfying a quasi-co-location relationship;
   the F control channel resources being specific control channel resources;
   quasi-co-location reference signals associated with a type of quasi-co-location parameter being configured in the F control channel resources;
   quasi-co-location reference signals associated with a type of quasi-co-location parameter in the F control channel resources comprising at least one of F quasi-co-location reference signals with a largest density or F quasi-co-location reference signals with a largest bandwidth in a quasi-co-location reference signal set associated with the type of quasi-co-location parameter in a control channel resource set;
   single side band (SSB) control channel resources comprised in a quasi-co-location reference signal set associated with a type of quasi-co-location parameter in a control channel resource set being preferentially selected as the F control channel resources;
   control channel resource indexes of the F control channel resources satisfying the predetermined feature in a control channel resource set; or
   quasi-co-location reference signals associated with a type of quasi-co-location parameter and in the F control channel resources belonging to a frequency domain bandwidth, wherein one of the F control channel resources comprises at least one of a set formed by control channel resources configured in the frequency domain bandwidth or a set formed by control channel resources satisfying a predetermined feature;
   wherein F is a positive integer not less than 1.
49. An apparatus for processing beam failure recovery, comprising:
   a processing module, which is configured to: in response to frequency domain bandwidth part being switched, perform a predetermined operation on a beam failure recovery process.
50. An apparatus for processing beam failure recovery, comprising:
   a determination module, which is configured to determine a beam failure recovery parameter correspondence between N sets of first-type beam failure recovery parameters and M sets of second-type beam failure recovery parameters; and
   an operation module, which is configured to perform, according to the beam failure recovery parameter correspondence, at least one of: a beam failure recovery process or a switch of frequency domain bandwidth part;
   wherein N and M are each a positive integer.
51. An apparatus for processing beam failure recovery, comprising:
   a recovery module, which is configured to: perform a beam failure recovery process according to at least one of a beam failure recovery parameter or a preset rule, wherein the beam failure recovery parameter satisfies the preset rule.
52. A storage medium storing a computer program, wherein when the computer program is executed, the method of any one of items 1 to 17, 18 to 37 and 38 to 48 is performed.
53. An electronic apparatus, comprising a memory and a processor, wherein the memory stores a computer program, and the processor is configured to execute the computer program to perform the method of any one of items 1 to 17, 18 to 37 and 38 to 48.

## Claims

1. A method for processing beam failure recovery, comprising:
determining a beam failure recovery parameter correspondence between N sets of first-type beam failure recovery parameters and M sets of second-type beam failure recovery parameters; and
performing, according to the beam failure recovery parameter correspondence, a beam failure recovery process;
wherein each of the N and M is a positive integer, and
wherein the performing the beam failure recovery process, according to the beam failure recovery parameter correspondence, comprises:
performing the beam failure recovery process according to one set of first-type beam failure recovery parameters, and
in response to a predetermined event occurring in the beam failure recovery process, performing a fifth-type predetermined operation in the beam failure recovery process according to one set of the M sets of second-type beam failure recovery parameters having the beam failure recovery parameter correspondence with one set of the N first-type beam failure recovery parameters.

2. The method of claim 1, wherein the determining the beam failure recovery parameter correspondence between the N sets of first-type beam failure recovery parameters and the M sets of second-type beam failure recovery parameters comprises at least one of:
determining the beam failure recovery parameter correspondence according to information about a control channel resource group;
determining the beam failure recovery parameter correspondence according to an index of one set of first-type beam failure recovery parameters among the N sets of first-type beam failure recovery parameters and an index of one set of second-type beam failure recovery parameters among the M sets of second-type beam failure recovery parameters; or
an intersection between a parameter type set comprised in the first-type beam failure recovery parameters and a parameter type set comprised in the second-type beam failure recovery parameters is an empty set.

3. The method of claim 2, wherein
the first-type beam failure recovery parameters comprise at least one of: a beam failure detection signal set, a maximum duration corresponding to a beam failure detection timer or a predetermined threshold corresponding to a beam failure detection counter;
the second-type beam failure recovery parameters comprise a candidate reference signal set,; the predetermined event in the beam failure recovery process is that the beam failure event is detected; and
the fifth-type predetermined operation comprises at least one of: selecting a reference signal from the candidate reference signal set, reporting reference signal indication information in the reporting resource, determining quasi-co-location reference signal information of a predetermined channel according to reported reference signal indication information.

4. The method of any one of claims 1 to 3, wherein the N sets of first-type beam failure recovery parameters and the M sets of second-type beam failure recovery parameters satisfy at least one of the following conditions:
the N sets of first-type beam failure recovery parameters and the M sets of second-type beam failure recovery parameters are beam failure recovery parameters for one or more CCs;
the N sets of first-type beam failure recovery parameters and the M sets of second-type beam failure recovery parameters are parameters for one or more beam failure recovery processes;
the N sets of first-type beam failure recovery parameters correspond to N control channel resource groups;
the M sets of second-type beam failure recovery parameters correspond to M control channel resource groups;.

5. The method of claim 4, wherein the method satisfies at least one of the following conditions:
the N control channel resource groups belong to one frequency domain bandwidth part;
the M control channel resource groups belong to one frequency domain bandwidth part;
the N control channel resource groups and the M control channel resource groups belong to one frequency domain bandwidth part.

6. An apparatus for processing beam failure recovery, comprising:
a determination module, which is configured to determine a beam failure recovery parameter correspondence between N sets of first-type beam failure recovery parameters and M sets of second-type beam failure recovery parameters; and
an operation module, which is configured to perform, according to the beam failure recovery parameter correspondence, a beam failure recovery process;
wherein N and M are each a positive integer, and
wherein the operation module is further configured to:
perform the beam failure recovery process according to one set of first-type beam failure recovery parameters, and
in response to a predetermined event occurring in the beam failure recovery process, perform a fifth-type predetermined operation in the beam failure recovery process according to one set of the M sets of second-type beam failure recovery parameters having the beam failure recovery parameter correspondence with one set of the N first-type beam failure recovery parameters.

7. The apparatus of claim 6, wherein the determination of the beam failure recovery parameter correspondence between the N sets of first-type beam failure recovery parameters and the M sets of second-type beam failure recovery parameters comprises at least one of:
determine the beam failure recovery parameter correspondence according to information about a control channel resource group;
determine the beam failure recovery parameter correspondence according to an index of one set of first-type beam failure recovery parameters among the N sets of first-type beam failure recovery parameters and an index of one set of second-type beam failure recovery parameters among the M sets of second-type beam failure recovery parameters; or
an intersection between a parameter type set comprised in the first-type beam failure recovery parameters and a parameter type set comprised in the second-type beam failure recovery parameters is an empty set.

8. The apparatus of claim 7, wherein
the first-type beam failure recovery parameters comprise at least one of: a beam failure detection signal set, a maximum duration corresponding to a beam failure detection timer or a predetermined threshold corresponding to a beam failure detection counter;
the second-type beam failure recovery parameters comprise a candidate reference signal set,; the predetermined event in the beam failure recovery process is that the beam failure event is detected; and
the fifth-type predetermined operation comprises at least one of: selecting a reference signal from the candidate reference signal set, reporting reference signal indication information in the reporting resource, determining quasi-co-location reference signal information of a predetermined channel according to reported reference signal indication information.

9. The apparatus of any one of claims 6 to 8, wherein the N sets of first-type beam failure recovery parameters and the M sets of second-type beam failure recovery parameters satisfy at least one of the following conditions:
the N sets of first-type beam failure recovery parameters and the M sets of second-type beam failure recovery parameters are beam failure recovery parameters for one or more CCs;
the N sets of first-type beam failure recovery parameters and the M sets of second-type beam failure recovery parameters are parameters for one or more beam failure recovery processes;
the N sets of first-type beam failure recovery parameters correspond to N control channel resource groups;
the M sets of second-type beam failure recovery parameters correspond to M control channel resource groups;.

10. The apparatus of claim 9, wherein at least one of the following conditions is satisfied:
the N control channel resource groups belong to one frequency domain bandwidth part;
the M control channel resource groups belong to one frequency domain bandwidth part;
the N control channel resource groups and the M control channel resource groups belong to one frequency domain bandwidth part.

11. A storage medium storing a computer program, wherein when the computer program is executed, the method of any one of claims 1 to 5 is performed.
